(19) Europäisches Patentamt
European Patent Office
Office européen des brevets

(11) **EP 4 723 451 A1**

(12) **EUROPEAN PATENT APPLICATION**
published in accordance with Art. 153(4) EPC

(43) Date of publication:
**08.04.2026 Bulletin 2026/15**

(21) Application number: **23940426.2**

(22) Date of filing: **07.11.2023**

(51) International Patent Classification (IPC):
**H02M 1/00** (2006.01)    **H02M 1/42** (2007.01)
**H02M 3/335** (2006.01)

(52) Cooperative Patent Classification (CPC):
**H02M 1/00; H02M 1/42; H02M 3/335**

(86) International application number:
**PCT/CN2023/130202**

(87) International publication number:
**WO 2024/250550 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 05.06.2023  CN 202310658624
28.09.2023  CN 202311287398

(71) Applicant: **Shenzhen Contemporary E-energy
Technology Co.,
Limited
Shenzhen, Guangdong 518000 (CN)**

(72) Inventors:
• **SU, Xin
Shenzhen, Guangdong 518000 (CN)**
• **BI, Shuowei
Shenzhen, Guangdong 518000 (CN)**

(74) Representative: **Viering, Jentschura & Partner
mbB
Patent- und Rechtsanwälte
Am Brauhaus 8
01099 Dresden (DE)**

(54) **POWER SOURCE CIRCUIT, EXTENDED POWER SOURCE CIRCUITS, AND PFC/BOOST/BUCK
IMPLEMENTATION METHOD THEREFOR**

(57)    This application discloses a power circuit, its first, second, and third extended power circuits, and a method for implementing PFC and boost/buck adjustment based on this power circuit. The power circuit comprises an information acquisition module, an inductor, a switch, a controller for controlling the operating state of the switch, a capacitor, a transformer, and an output half-wave rectifier module. By controlling the duty cycle and frequency of the switch, the power circuit of this application regulates the charge and discharge time of the inductor. This enables power factor correction and dynamic boosting/bucking adjustment based on the input voltage level and the required output voltage of the power circuit, thereby meeting the load requirements.

Compared with the prior art, the power circuit unit and its first, second, and third extended power circuits in this application can simultaneously implement functions such as boosting, bucking, and power factor correction. They require fewer components, which effectively saves costs, offers excellent stability, and features low energy loss and high power conversion rate.

*FIG.3*

**Description**

**TECHNICAL FIELD**

The present application relates to the technical field of power circuit, and in particular, to power circuit technology in a high-power scenario.

**BACKGROUND**

In the existing technology, power modules used in high-power (typically defined as greater than 200 watts) or high-power scenarios consist of two-stage circuits. The front stage generally employs various topology circuits based on Boost rectifiers or equivalents of Boost circuits to achieve Power Factor Correction (PFC). The mainstream PFC topology solutions include the three-phase three-wire three-level Vienna (other examples include: two-channel interleaved parallel three-phase three-wire three-level Vienna, single-phase interleaved three-phase three-wire three-level Vienna, totem-pole topology circuits, and Boost circuits); the rear-stage DC-DC conversion typically utilizes circuit topologies based on full-bridge or half-bridge configurations to achieve bucking/regulation.

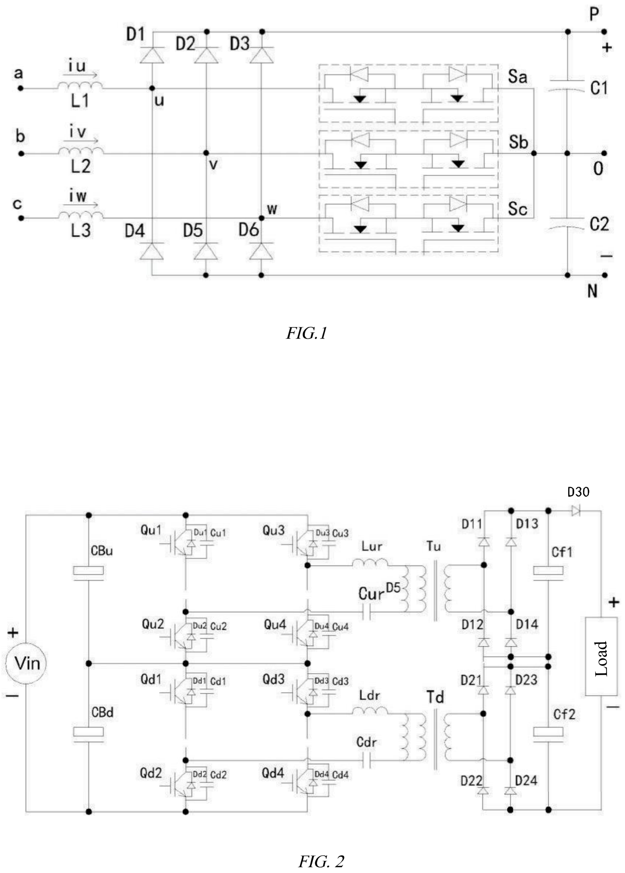

FIG. 1 is a schematic diagram of connection of a front-stage topology circuit of a power module for implementing PFC, specifically a three-phase three-wire three-level Vienna circuit, in the prior art. FIG. 2 is a schematic diagram of connection of a rear-stage DC/DC topology circuit of a power module for implementing voltage regulation/isolation of the power module, specifically two groups of interleaved series-connected two-level full-bridge LLC, in the prior art. From just FIG. 1 and FIG. 2, it is evident that the power circuits in prior art involve a large number of components and an excessively complex circuit structure, which inevitably leads to issues such as poor stability.

In prior art, power modules that employ a two-stage circuit to achieve Power Factor Correction (PFC) and bucking/regulation via DC/DC typically exhibit high energy consumption. For example, power modules that maintain a full-load efficiency between 95% and 95.5% are common in the market: Huawei's charging module product with model number R100030G1 has documented full-load efficiency of 95.35% in public data. Infypower's charging module product with model number REG1K0100A2 has documented full-load efficiency of 95.5% in public data. Taking a charging module product with a full-load efficiency of 95.5% and a power of 30 kW as an example, the energy loss per hour amounts to:

$$(1-95.5\%) \times 30 \text{ kW} \times 1 \text{ h} = 1.35 \text{ kWh}$$

This means approximately 1.35 kWh of energy is wasted per hour.

It can be learned that the power module in the prior art requires the front-stage circuit and the rear-stage circuit for implementing power conversion and transmission, with a large number of components and complex circuit connections. It suffers from issues such as low conversion efficiency, high cost, significant energy loss, poor stability, and poor scalability.

**SUMMARY**

An objective of the present application is to provide a power circuit and the first, second, and third extended power circuits based on the power circuit, to resolving issues in prior art such as low power conversion rate, high cost for achieving the same efficiency, and poor stability in power circuits.

The present application provides a power circuit, which comprises an information acquisition module, a power circuit unit, and a controller. The power circuit unit comprises an inductor, a switch, a capacitor, and a transformer;

One end of the input power supply that provides electric energy to the power circuit unit is connected to one end of the inductor. The other end of the inductor is connected to one end of the capacitor and one end of the switch. The other end of the capacitor is connected to one end of the primary winding of the transformer. The other end of the switch and the other end of the primary winding of the transformer are connected to the other end of the input power supply and grounded. The two output ends of the secondary winding of the transformer serve as the output ends of the power circuit unit.

The information acquisition module is used to collect information from the input and/or output ends of the power circuit unit.

The controller is connected to the information acquisition module and the switch. It is used to generate instruction information that controls the duty cycle and frequency of the switch based on the information collected by the information acquisition module and the output requirements of the load on the power circuit, and to control the switch to execute the instruction information.

The present application further provides a first extended power circuit. When the input power supply is alternating current, it comprises two power circuit units, including the aforementioned two power circuit units. The first extended power circuit comprises a first power circuit unit, a second power circuit unit, a first information acquisition module for collecting voltage/current information at the input and output ends of the first extended power circuit, a first diode and a second diode respectively connected to the first and second power circuit units, and a first control center connected to the first information acquisition module and configured to control the operating states of switches in the first/second power circuit unit.

The present application further provides a second extended power circuit. When the input power is alternating current, the second extended power circuit comprises the aforementioned two power circuit units, namely a third power circuit unit and a fourth power circuit unit, a second information acquisition module for collecting voltage/current information at the input and output ends of the second extended power circuit, and a second control center connected to the second information acquisition module and configured to control operating states of switches in the third/fourth power circuit unit.

The present application further provides a third extended power circuit. When the input power is alternating current, the third extended power circuit comprises the aforementioned second extended power circuit with the inductor omitted in either the third or the fourth power circuit unit.

The present application further provides method for implementing power factor correction and dynamic boosting/bucking adjustment with a power circuit. The power circuit is the aforementioned power circuit, or the aforementioned first extended power circuit, or the aforementioned second extended power circuit, or the aforementioned third extended power circuit, wherein the method comprises:

step S1: obtaining a current actual input current value, a current actual input voltage value, a current actual output voltage value, and a current actual output current value;

step S2: comparing an obtained current actual output power with a target output power required by a connected load;

step S3: dynamically adjusting an input current value based on a result of the comparison between the current actual output power and the target output power;

step S4: comparing the current actual input current value with the target input current value, and dynamically determining duty cycle and frequency adjustment instruction information for a switch based on a result of the comparison; and

step S5: executing, by the switch of a power circuit, the instruction information to dynamically control charge and discharge time of an inductor of the power circuit, so that the current actual input current value of the power circuit approaches the target input current value as much as possible.

Compared with the prior art, the power circuit of the present application includes a power circuit unit composed of an inductor, a switch, a capacitor, and a transformer; an information acquisition module for collecting current/voltage information at the input and output ends of the power circuit; and a controller that, based on the information collected by the information acquisition module and the output requirements of the load, generates instruction information for controlling the duty cycle and frequency of the switch, and controls the switch to execute the instruction information. When the switch is in the closed state, the switch, the input power supply, and the inductor form a loop to charge the inductor, while the capacitor, the switch, and the primary winding inductor of the transformer equivalently form an LC resonant circuit. When the switch is in the open state, the input power supply, the inductor, the capacitor, and the primary winding of the transformer equivalently form an LLC resonant circuit. The input power supply and the charged inductor charge the capacitor, and the change in current through the primary winding of the transformer induces electric energy into the secondary winding. The output end of the secondary winding serves as the power output end of the power circuit, thereby achieving energy transfer.

The first extended power circuit, the second extended power circuit, and the third extended power circuit described in this application are extensions and optimizations based on the power circuit, which further reduce energy consumption and improve power conversion rate. Moreover, in high-power scenarios, the two power circuits include two transformers and two switches, enabling more uniform heat dissipation for the transformers and switches and effectively addressing the issue of excessive heat concentration in transformers and switches.

The method described in this application for simultaneously achieving power factor correction and boosting/-bucking according to output requirements adjusts the peak input current at high frequency, further modulates the switch frequency and duty cycle, and controls the charge and discharge time of the inductor. This not only achieves power factor correction but also enables dynamic boosting/bucking adjustment based on the input voltage and the required output voltage of the power circuit, along with high-frequency isolation to meet load demands.

Compared with the prior art, the power circuit of the present application can simultaneously achieve functions such as boosting/bucking, power factor tracking, and high-frequency isolation. It uses fewer components, effectively reduces costs, exhibits excellent stability, minimizes energy loss, and achieves high power conversion rate.

## BRIEF DESCRIPTION OF THE DRAWINGS

FIG. 1 is a schematic diagram of connection of a three-phase three-wire three-level Vienna circuit, a front-stage PFC topology circuit, of a power module circuit in the prior art;

FIG. 2 is a schematic diagram of connection of two groups of interleaved series-connected two-level full-bridge circuits, a rear-stage DC/DC topology circuit, of a power module circuit in the prior art;

FIG. 3 is a schematic diagram of connection of a power circuit unit according to one embodiment of the present application;

FIG. 4 is a schematic diagram of connection of a power circuit unit according to another embodiment of the present application;

FIG. 5 is a schematic diagram of connection of the first extended power circuit according to one embodiment of the present application;

FIG. 6 is a schematic diagram of connection of the second extended power circuit according to one embodiment of the present application;

FIG. 7 is a schematic diagram of connection of the third extended power circuit according to one embodiment of the present application;

FIG. 8 is a schematic diagram of connection of a power circuit unit according to another embodiment of the present application;

FIG. 9 is a schematic diagram of connection of a power circuit unit according to another embodiment of the present application;

FIG. 10 is a flowchart of a method for implementing both power factor correction and dynamic boosting/bucking adjustment for a power circuit according to an embodiment of the present application.

## DETAILED DESCRIPTION OF EMBODIMENTS

To make a person skilled in the art better understand the technical solutions of the present application, the technical solutions in embodiments of the present application are described below clearly and completely with reference to the accompanying drawings in the embodiments of the present application. Apparently, the embodiments described are merely some rather than all of the embodiments of the present application. All other embodiments obtained by a person of ordinary skill in the art based on the embodiments of the present application without creative efforts shall fall within the scope of protection of the present application.

It should be noted that the terms "first", "second", and the like in the description, claims, and accompanying drawings of the present application are intended to distinguish between similar objects but do not necessarily describe a specific order or sequence.

It should be understood that data used in this way can be interchanged where appropriate, such that the embodiments of the present application described herein can be implemented in a sequence other than those illustrated or described herein.

In addition, the terms "include" and "have" and any variation thereof are intended to cover a non-exclusive inclusion, for example, a process, method, system, product, or device that includes a series of steps or units is not necessarily limited to those steps or units that are explicitly listed, but may include other steps or units not explicitly listed or inherent to such a process, method, product, or device.

As shown in FIG. 1 and FIG. 2, the power circuits in the prior art adopt a front-stage circuit and a rear-stage circuit. The front-stage circuit in FIG. 1 performs functions such as power factor correction (PFC), boosting, and rectification, while the rear-stage circuit in FIG. 2 handles bucking, voltage regulation, and input-output isolation. The entire power circuit consists of these two stages, both of which involve a large number of components and complex circuit connections. In the field of high-power power supplies exceeding 200 watts, Vienna and a totem pole are commonly used for front-stage power factor correction (PFC), and an LLC, a phase-shifted full-bridge, and the like are commonly used in a rear stage.

In traditional power circuit technologies, the front-stage PFC circuit is used to rectify input alternating current (AC) power and boost the AC power to fixed-voltage direct current (DC) power, with power factor correction completed during the boosting process. A rear-stage DC/DC conversion circuit is used to dynamically boost and buck the fixed-voltage DC power generated in the front stage to a voltage specified by a user of a product. Since a current in a power circuit needs to flow through the two stages of PFC and DC/DC circuits, significant energy loss occurs in components.

According to the power circuit disclosed in the present application, a single circuit can implement capabilities of front-stage PFC and rear-stage DC/DC conversion in the prior art, and less components are used to implement power factor correction and dynamic boosting/bucking to a voltage required by a load, and simultaneously provides input-output isolation.

The power circuit of the present application implements electric energy conversion, that is, implements electric energy conversion at different currents, voltages, and powers, and may specifically include but is not limited to an inverter, a converter, a power converter, a frequency converter, a power charging module, and the like.

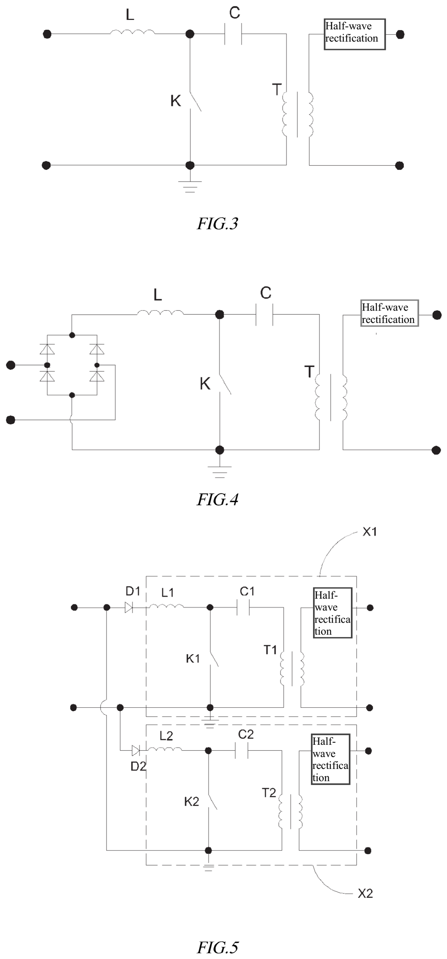

Referring to FIG. 3, the present application provides a power circuit, which comprises an information acquisition module, a power circuit unit, and a controller. The power circuit unit comprises an inductor, a switch, a capacitor, and a transformer;

one end of the input power supply that provides electric energy to the power circuit unit is connected to one end of the inductor. The other end of the inductor is connected to one end of the capacitor and one end of the switch. The other end of the capacitor is connected to one end of the primary winding of the transformer. The other end of the switch and the other end of the primary winding of the transformer are connected to the other end of the input power supply and grounded. The two output ends of the secondary winding of the transformer serve as the output ends of the power circuit unit.

The information acquisition module is used to collect information from the input and/or output ends of the power circuit unit.

The controller is connected to the information acquisition module and the switch. It is used to generate instruction information that controls the duty cycle and frequency of the switch based on the information collected by the information acquisition module and the output requirements of the load on the power circuit, and to control the switch to execute the instruction information.

Specifically, the working process of the power circuit is as follows:

When the switch is in a closed state, the switch, the input power supply, and the inductor form a loop, charging the inductor; the capacitor, the switch, and the inductance of the transformer's primary winding together form an LC resonant circuit.

When the switch is in the open state, the input power supply, the inductor, the capacitor, and the transformer's primary winding form an LLC resonant circuit. The input power supply and the charged inductor charge the capacitor, while simultaneously inducing energy from the primary winding to the secondary winding of the transformer.

Here, the inductor in the power circuit unit, in coordination with the controller's regulation of the switch's operating state, enables the power circuit to simultaneously achieve power factor correction and dynamic boosting/bucking adjustment according to output requirements.

FIG. 3 shows a connection diagram of the power circuit unit of the present application.

The power circuit unit includes: an inductor L, a switch K, a capacitor C, a transformer T, and an output half-wave rectifier module. One end of the input power supply is connected to one end of the inductor L; the other end of the inductor L is connected to one end of the capacitor C and one end of the switch K. The other end of the capacitor C is connected to one end of the primary winding of the transformer T. The other end of the switch K and the other end of the primary winding of the transformer are connected to the other end of the input power supply and grounded. The two output ends of the secondary winding of the transformer serve as the power output ends of the power circuit unit.

The controller is configured to control the proportion of time during a cycle period that the switch K remains in the closed state based on the power output requirements of the power circuit. Furthermore, the cycle period here may vary, meaning the cycle period time can be adjustable. Based on the voltage and current information collected by the information acquisition module from the input and output ends, as well as the load requirements for the output of the power circuit unit, the controller generates switch control information to regulate the opening and closing frequency and duty cycle of the switch K.

The operating principle of the power circuit are as follows:

Specifically, based on the information collected by the information acquisition module and the output requirements of the load, instruction information for controlling the duty cycle and frequency of the switch is generated. When switch K is in the closed state, it forms a circuit with the input power supply and inductor L. At this point, the input power supply charges inductor L through this circuit. Capacitor C, switch K, and the inductance of the primary winding of transformer T together form an LC resonant circuit. When switch K is in the open state, the input power supply, inductor L, capacitor C, and the inductance of the primary winding of transformer T form an LLC resonant circuit. The input power supply and the charged inductor L then supply energy to capacitor C, and induce energy to the secondary winding of the transformer through the change in current in the primary winding of the transformer.

The power circuit disclosed in this embodiment controls the operating state of switch K, enabling inductor L to charge and then discharge to capacitor C and the primary winding of transformer T. This allows the primary winding of transformer T to receive energy, which is then induced to the secondary winding of transformer T, ultimately delivering electric energy to the output. By adjusting the frequency and duty cycle of switch K, the charge/discharge time of inductor L and the primary winding inductance of the transformer can be regulated, thereby controlling the amount of electric energy output from the transformer's secondary winding. Compared with the prior art, the embodiment enables electric energy transfer to be achieved using a power circuit with a reduced number of components, and accordingly provides advantages including low cost, high stability, and high conversion rate.

Specifically, the loops formed during the operating process of the power circuit disclosed in this embodiment include:

Loop 1 (Input power supply + inductor L + capacitor C + transformer T),
loop 2 (Input power supply + inductor L + switch K), and
loop 3 (Capacitor C + transformer T + switch K).

Furthermore, the detailed operating process of the power circuit disclosed in this embodiment is as follows: When switch K is closed, the input power supply charges inductor L, and inductor L store energy. At a moment when the switch K is opened, the inductor L generates a high voltage to avoid an abrupt change in a current across the inductor, and transmits the electric energy through the loop 1 newly formed after the switch K is opened. The inductor L and the power supply charge capacitor C. As the input voltage varies periodically, the voltage across capacitor C follows the current input voltage. Especially, when the AC input voltage approaches zero, the voltage across capacitor C also approaches zero. The energy stored in inductor L and the primary winding of transformer T is induced to the secondary winding of transformer T. At this moment, the input voltage plus the voltage across inductor L equals the voltage across capacitor C plus the voltage across the primary winding of transformer T, expressed as:

$$V_{input} + V_L = V_C + V_{T\_primary}$$

Transformer T then induces the electric energy to its secondary winding. When the switch K is switched from the open state to the closed state, the loops the circuits formed in sequence and the specific operating process are as follows: The power circuit charges inductor L through loop 2, and charges the primary winding of transformer T via capacitor C through loop 3. The voltage across capacitor C follows the current input voltage and supplies energy to the primary winding of transformer T. At this time, the primary winding of transformer T and capacitor C equivalently form an LC resonant circuit, preserving the energy within the loop. Simultaneously, once switch K is closed, the input power supply charges inductor L through loop 2, preparing inductor L for the next cycle of energy storage.

When the electric energy supplied by the input power to the power circuit unit is a periodically fluctuating voltage, such as periodic sine waves, square waves, triangular waves, trapezoidal waves, etc., the power circuit is capable of simultaneously achieving power factor correction and dynamic boosting/bucking adjustments to meet the corresponding output requirements.

Specifically, when the electric energy supplied by the input power to the power circuit unit is a periodically fluctuating voltage, the process by which the inductor of the power circuit, in coordination with the operating state of the switch, enables the power circuit to implement power factor correction is as follows.

When the input power supply provides a periodic AC power input, a voltage period T' of the input power supply after full-wave rectification is set to a first time interval (if the input power supply provides DC power, the voltage period T' of the input power supply is directly set to the first time interval without rectification), and the input voltage continuously changes in the first time interval T'.

Due to the characteristic of the inductor that the current cannot change abruptly, which is determined by a parameter characteristic of the inductor, a time period interval corresponding to a switching frequency of the control switch K of the controller is a second time interval T".

When the second time interval T" is less than the voltage period T' of the input power supply by a plurality of orders of magnitude, the switch K has been opened and closed hundreds or thousands of times in a range of the voltage period T'.

In other words, for a process of controlling the operation of the power circuit unit based on the operating state of the switch K, the voltage of the input power supply does not change significantly from a local perspective, and may basically be considered constant, that is, corresponding voltages of the input power supply before and after the switch K is switched once are considered constant. In addition, when the first time interval T' includes a large number of second time intervals T", that is, the input voltage changes significantly, the inductor L has undergone a plurality of charge and discharge processes through control of the switch K. In other words, in this case, the inductor L has completed a plurality of cycles of the loop 1, the loop 2, and the loop 3 during the above operating process. The inductor L may obtain electric energy even through a relatively low voltage corresponding to the current input power supply, and smoothly transmit the current to the transformer T through the above loops, for further provision to the electric energy output end. Instead of utilizing only a peak portion of a sinusoidal voltage of the input power supply, this can effectively and smoothly transmit even the relatively low voltage of the input power supply, implementing power factor correction.

In this embodiment, the main inductor can implement power factor correction in the power circuit. This means that the inductor can fully utilize a part of low-voltage electric energy input by the input power supply, by appropriately setting the values of T' and T" through the aforementioned method, under conditions where the output power is at rated power or above half-load, ensuring that a power factor of the power circuit unit can exceed 99%.

Specifically, while implementing power factor correction, the main inductor of the power circuit unit in the present application may further cooperate with the operating state of the switch K to perform dynamic boosting/bucking operations based on a specific input voltage and a specific output voltage required by the load of the power circuit. A specific boosting/bucking process and a principle are as follows.

When the voltage provided by the power circuit unit is inadequate, cannot meet the requirement of the load, and needs to be boosted, the controller generates control information that increases the duty cycle of the switch K or reduces the operating frequency of the switch K, that is, increasing charge time of the inductor L and the primary winding of the transformer, so that when the switch is open, the inductor L and the primary winding of the transformer may have more electric energy transmitted to the primary winding of the transformer and further induced to the secondary winding of the transformer, to implement boosting.

Further, if the voltage provided by the power circuit unit is relatively high, and needs to be bucked, the controller generates control information that reduces the duty cycle of the switch K or increases the operating frequency of the switch, to reduce the charge time of the inductor L and the primary winding of the transformer. In this way, electric energy transmitted by the inductor to the secondary winding of the transformer is reduced, to implement bucking.

Herein, when the period interval T" corresponding to the operating frequency of the switch K is entirely greater than the voltage period T' of the input power supply, that is, T">>T', the frequency and the duty cycle of the switch K are adjusted to further adjust the charge and discharge time of the main inductor, to implement boosting/bucking. Specifically, a length of the voltage period T" of the input power supply may be set based on a specific condition of the input power supply.

Further, if the input power supply provides AC power whose voltage changes periodically, for example, sinusoidal AC power, a frequency of the input power supply is 50 Hz, with a corresponding period of 20 ms, and after passing through the rectifier bridge, a pulsating DC waveform is formed with a corresponding T'=10 ms. If the voltage of the input power supply changes with no obvious periodicity, a value of T' may be set by analogy with a change period of the sinusoidal AC power. Any specific setting manner may be used, provided that the requirements described above are met and the solution of the present application can be implemented.

In this embodiment, "boosting" and "bucking" refer to the ability of the power circuit to supply the required voltage, current, and power to the load based on its demand. Meanwhile, to ensure that the circuit delivers power to meet the load requirements, the load imposes demands on the output voltage of the circuit. For loads such as battery loads, resistive loads, and grid loads, some exhibit minimal variation in output voltage but significant changes in current, while others experience significant changes in output voltage with current varying linearly relative to voltage. Additionally, certain loads impose specific requirements on the waveform of the output voltage.

According to the load requirements, the voltage provided by the power circuit may be higher than the maximum input voltage or lower than the maximum input voltage. Moreover, the output voltage of the power circuit may vary over operating time. The term "dynamic boosting" as described in this application refers to a scenario where the output voltage is higher than the maximum input voltage and is dynamically adjusted based on load requirements. The term "dynamic bucking" refers to a scenario where the output voltage is lower than the maximum input voltage and is dynamically adjusted based on load requirements.

In order to ensure that the power circuit of the present application maintains advantages such as good stability and low cost while also achieving relatively high energy conversion rate, component parameters in the circuit groups of the power circuit need to be determined.

Principles for determining component parameters in the circuit group are as follows: Determination of specific component parameters is related to an input voltage, an output voltage, and an output power of the circuit group. First, a maximum input voltage, a maximum output voltage, and an output power of the circuit group are determined. In the case of alternating current, the maximum voltage refers to an effective value thereof, and in the case of direct current, the maximum voltage refers to a maximum value within an input/output voltage range.

Based on a ratio between the maximum input voltage and the maximum output voltage and the output power of the power circuit unit, parameters of components in the circuit group are determined, including capacitance parameters, inductance parameters, inductance values of primary and secondary windings of a transformer, a turns ratio between the primary and secondary windings, and an operating frequency range of switches.

Specifically, in practical implementations, when determining inductance parameters of an inductor and primary and secondary windings of a transformer in the circuit group, the following factors need to be considered:

When parameters such as the operating frequency and duty cycle of the switch, the primary winding inductance of a transformer, and the inductance value of the inductor remain unchanged, an increase in the input voltage allows the primary winding of the transformer to store more energy during the turn-on period of a switch. During a turn-off period of the switch, energy stored in the primary winding of the transformer is induced to the secondary winding of the transformer, thereby increasing an output power of the power circuit unit. Conversely, when the input voltage decreases, the output power of the power circuit unit can be reduced.

When parameters such as the maximum input voltage, the inductance value of the inductor, and the operating frequency and duty cycle of the switch remain unchanged, a decrease in the inductance value of a primary winding of the transformer allows the primary winding to store more energy during a turn-on period of the switch. During a turn-off period of the switch, energy stored in the primary winding is induced to the secondary winding of the transformer, thereby increasing an output power of the power circuit unit. Correspondingly, when the primary winding inductance of the transformer increases, the output power of the power circuit unit can be reduced.

In addition, during determination of the primary winding inductance of the transformer, it is also necessary to consider that excessive energy storage in the primary winding may cause magnetic saturation of the transformer, thereby reducing energy conversion rate.

In practice, changing the turn ratio between the primary and secondary windings of a transformer affects the conversion rate of the circuit. Specifically, when the input voltage, operating frequency and duty cycle of the switch, load resistance, primary winding inductance of the transformer, and the inductance of the inductor are fixed, increasing the number of turns in the secondary winding or decreasing the number of turns in the primary winding, that is, reducing the primary-to-secondary turns ratio, leads to an increase in the output voltage. Conversely, decreasing the number of turns in the secondary winding or increasing the number of turns in the primary winding, that is, increasing the primary-to-secondary turns ratio, results in a reduction in the output voltage. By determining the transformer parameters according to specific application scenarios and the aforementioned considerations, the conversion rate of the power circuit unit can be effectively improved.

In practice, when parameters such as the input voltage, the operating frequency and duty cycle of the switch, the primary winding inductance of the transformer are fixed, a decrease in the inductance of the inductor allows the inductor to store more energy during the turn-on period of a switch. During a turn-off period of the switch, energy stored in the inductor is induced to the secondary winding of the transformer, thereby increasing an output power of the power circuit unit. Conversely, when the inductance of the inductor increases, the output power of the power circuit unit can be reduced.

When determining the frequency range of the switch, the following factors need to be considered. Under conditions where other component parameters in the power circuit remain unchanged, reducing the frequency of the switch causes the energy storage time t during which the switch is closed within a single switching cycle to increase, and correspondingly the frequency f decreases. During the period when the switch is closed, the energy stored in the inductor and the primary winding of the transformer increases, thereby increasing the output power of the power circuit unit. Correspondingly, increasing the frequency of the switch reduces the output power of the power circuit unit. In addition, as the frequency of the switch increases, switching losses are generated during the turn-on and turn-off transitions of the switch, and increasing the frequency of the switch further increases such switching losses. Herein, the conversion rate of the transformer also needs to be considered. Different magnetic core materials exhibit different inductance values and conversion rates at different frequencies. For example, when the switching frequency is lower than 30 kHz, transformer saturation may occur, resulting in a reduction in conversion efficiency; an excessively high switching frequency, for example higher than 500 kHz, may cause the inductance of the transformer to change significantly, thereby reducing the conversion rate.

The process of determining the capacitance value of the capacitor is as follows. As described above, the capacitor stores energy during the turn-off state of the switch, and during the turn-on state of the switch, the capacitor resonates with the primary winding of the transformer to transfer the stored energy to the primary winding of the transformer. If the capacitance value is excessively small, the energy stored in the capacitor during operation is caused to be insufficient, thereby reducing the output power of the power circuit unit and consequently lowering the conversion rate. Conversely, if the capacitance value is excessively large, when the input voltage is an alternating current, the voltage across the capacitor cannot closely follow changes in the voltage of the input alternating current, resulting in difficulty in power factor correction and a reduction in energy conversion rate.

From the above analysis, it can be learned that the components and their interconnections included in the power circuit form an integrated whole. The parameter settings of the components are interdependent, and the configuration of all parameters exhibits a holistic nature. In practice, based on the input voltage conditions of the power circuit, the requirements of the connected load for output voltage/output power, and the detailed parameter selection principles outlined above, it is also essential to consider factors such as the material/cost of the aforementioned transformer/inductor and the saturation conditions of the transformer/inductor caused by the output power when designing the inductance value. Only by doing so can a balance in the parameters of all components within the entire power circuit be achieved. In other words, it is necessary to individually select the ranges for parameters such as the inductance of the inductor, primary winding inductance of the transformer, switching frequency, and capacitance of the capacitor in the power circuit. At the same time, based on the logical relationships between the parameter settings of these components, the coordination of all parameters must be considered holistically. This ensures that the power circuit not only exhibits excellent performance but also achieves superior power conversion rate.

Preferably, when a ratio of an input voltage maximum $V_{input}$ to an output voltage maximum $V_{output}$ of the power circuit is $V_{input} : V_{output} = 0.2$ to 8, and an output power is greater than 200 W, parameters of the capacitors range from 30 nF to 3 $\mu$F, inductance of the primary windings of the transformers ranges from 10 $\mu$H to 1,000 $\mu$H, and ratios of the primary windings to the secondary windings of the transformers are $R_{primary} : R_{secondary} = 1:5$ to 5: 1.

Specifically, when the output power of the power circuit unit is greater than 200 W, and the ratio of the input voltage maximum and the output voltage maximum is 0.2 to 8.0, according to the above parameter selection rule, when the parameter of the capacitor is less than 30 nF, a voltage across the capacitor rises excessively fast during a turn-off period of the switch, causing an excessive fast rise in a voltage across the switch. This may damage the switch, or require use of a switch with a higher withstand voltage, increasing the costs of the switch.

Meanwhile, in high-power scenarios, when the capacitance parameter is less than 30 nF, the energy stored in the capacitor of the power circuit during the turn-off period is insufficient to support the energy released to the primary winding inductance of the transformer during the turn-on period, resulting in a decrease in power conversion efficiency.

When the parameter of the capacitor is greater than 3 μF, when the switch is on, a current of the primary winding inductor of the transformer rises excessively fast, and at the moment when the switch is opened, a voltage spike brought by leakage inductance of the transformer is excessively high. This imposes higher voltage withstand requirements on the switch, increasing the costs of the switch.

In AC input scenarios, when the capacitance parameter of the power circuit exceeds 3 μF, excessive energy is stored in the capacitor. As the input voltage approaches the zero-crossing point of the sine wave, the voltage across the capacitor becomes significantly higher than the input voltage. This may result in a situation where, when the charging voltage for the inductor of the power circuit is close to 0 V, the charging voltage for the primary inductance of the transformer remains above 0 V, leading to reduced efficiency in power factor correction.

When the inductance of the primary winding of the transformer is less than 10 μH, it is relatively difficult to balance the parameters of the transformer. For example, an excessively small number of turns may lead to saturation, failing to bear an adequate power. Alternatively, if the number of turns is sufficient but the air gap in the magnetic core is too large, severe flux leakage may occur, leading to a decline in efficiency.

When the primary winding inductance of the transformer is greater than 1,000 μH, the energy stored in the primary inductor of the transformer during an energy storage period in which the switch is on decreases. The operating frequency needs to be reduced to bear an adequate power. However, an excessively low frequency may cause a low conversion efficiency of the transformer and susceptibility to saturation.

When the ratio of the primary winding to the secondary winding of the transformer is less than 1:5, issues in transformer manufacturing processes prone to causing excessive leakage inductance in the secondary winding of the transformer. When the switch is on, the leakage inductance of the secondary winding induces significant oscillation in the current of the switch, leading to a significant reduction in efficiency.

When the ratio of the primary winding to the secondary winding of the transformer is greater than 5:1, similar issues in transformer manufacturing processes prone to causing excessive leakage inductance in the primary winding of the transformer. At the moment the switch is closed, the leakage inductance of the primary winding induces significant voltage oscillation across the switch. This imposes higher voltage withstand requirements on the switch, leading to an increase in the costs of the switch.

Specifically, in this embodiment, the parameter of the main inductor in the power circuit unit is further determined according to the above parameter selection rule.

Since the electric energy in the power circuit is dynamically distributed between the inductor and the primary winding of the transformer during operation during the operation of the power circuit, depending on the magnitude relationship between the inductance value of the inductor and that of the primary winding of the transformer, the parameter of the main inductor needs to have a relatively wide range, specifically 1 μH to 10 mH.

When the main inductor stores more energy and participates more in energy transfer, a parameter value of the main inductor may be set relatively small, and a parameter range may be set to 1 μH to 100 μH.

When the main inductor does not participate in energy transfer or participates less in energy transfer, the parameter value of the main inductor may be set relatively large, and the parameter range may be set to 2 mH to 10 mH.

Further, the following conditions further need to be considered when a specific value of the parameter of the main inductor is determined.

If the inductance of the inductor is selected to be close to the inductance of the primary winding of the transformer, as an example rather than a limitation, both the inductance of the inductor and the inductance of the primary winding of the transformer are designed to 10 μH to 30 μH. In this case, energy stored in the primary winding of the transformer and the main inductor during the energy storage period in which the switch is on is consistent. This has the advantage that the inductor shares an energy transfer task, balancing heat generation points between the inductor and the primary winding of the transformer. In addition, a requirement is imposed on a material for a magnetic core of the inductor. The loss of a selected magnetic core during energy storage and transfer processes needs to be carefully tested to avoid inductor saturation, which may lead to an increase in inductor costs.

If the inductance of the inductor is much greater than the inductance of the primary winding of the transformer, as an example rather than a limitation, the inductance of the inductor is designed to 800 μH to 1,000 μH, and the inductance of the primary winding of the transformer is designed to 10 μH. In this case, the energy stored in the primary inductor of the transformer dominates during the energy storage period. This has advantages of reducing energy transfer of the inductor and reducing costs of the magnetic core of the inductor.

If the inductance of the inductor is set much less than the inductance of the primary winding of the transformer, as an example rather than a limitation, the inductance of the inductor is designed to 10 $\mu$H, and the inductance of the transformer is designed to 1,000 $\mu$H. In this case, the energy stored in the inductor is far greater than that stored in the primary winding of the transformer during the energy storage period. If both the inductance of the main inductor and the inductance of the primary winding of the transformer are set relatively large, as an example rather than a limitation, the inductance of the main inductor is designed to 100 $\mu$ to 1,000 $\mu$H, and the inductance of the transformer is designed to 100 $\mu$ to 1,000 $\mu$H. In this case, the switching frequency needs to be set to a very low range to output a power of more than 200 W. In addition, this is prone to causing saturation of the transformer and the inductor, imposing an extremely high requirement on setting of the parameters of the transformer and the inductor. In practice, the electric energy conversion efficiency of the power circuit unit in the solution is relatively low.

Specifically, in this embodiment, the operating frequency of the switch is related to a plurality of parameters. When parameters such as the inductance of the primary winding of the transformer, the inductance of the inductor, the duty cycle of the switch, the input voltage, and the load remain unchanged, reducing the operating frequency of the switch can improve the output power of the power circuit unit, and increasing the operating frequency of the switch can reduce the output frequency of the power circuit unit. It should be noted that an excessively low switching frequency is prone to causing saturation of the inductor and the transformer, and an excessively high switching frequency may cause an increase of switch loss. Specifically, the switching frequency needs to be dynamically adjusted in real time based on a fluctuation of the input voltage and a dynamic requirement for the output voltage.

Further, during the process where the power circuit performs dynamic boosting/bucking adjustment based on the output requirement, values of the duty cycle and the frequency of the switch need to be calculated and adjusted in real time. The process where the power circuit implements power factor correction involves adjusting the duty cycle and the frequency of the switch to make an actual input current approach in real time a target input current that is synchronized with the input voltage and changes in accordance with the law for the input voltage. Therefore, the range of the operating frequency of the switch needs to be dynamically adjusted while meeting power factor correction. Specifically, the range is approximately 30 kHz to 500 kHz.

In summary, when the output power of the power circuit unit is greater than 200 W, and the ratio of the input voltage maximum to the output voltage maximum is 0.2 to 8, the parameter of the capacitor is set to 30 nF to 3 $\mu$F, the primary inductance of the transformer is set to 10 $\mu$H to 1,000 $\mu$H, the parameter of the inductor is set to range from 1 $\mu$H to 10mH, and the ratio of the primary winding to the secondary winding of the transformer is set to 1:5 to 5:1. In this case, the power circuit can achieve an electric energy conversion rate of 96% or more, and the electric energy conversion rate is up to 98% in some specific scenarios. For details, refer to experimental data of Embodiments 1 to 64 in Table 1. Compared with the prior art, the power circuit has a higher electric energy conversion rate. In addition, the power circuit unit uses only a small number of components, achieving an ultra-high energy conversion rate at low costs, and can implement dynamic boosting and bucking based on the requirement of the load. Compared with a circuit with the same electric energy conversion rate in the prior art, the power circuit unit of the present application has higher stability, lower costs, and lower electric energy loss, and is more energy-saving.

Preferably, when a ratio of an input voltage maximum to an output voltage maximum of the power circuit unit is $V_{input} : V_{output} = 0.2$ to 1.0, and an output power is 200 W to 1,000 W, inductance of the primary winding of the transformer ranges from 10 $\mu$H to 1,000 $\mu$H, the ratio of the primary winding to the secondary winding of the transformers are $R_{primary} : R_{secondary} = 1:5$ to 1:1, and parameter of the capacitor ranges from 100 nF to 3 $\mu$F.

Specifically, this embodiment provides parameter ranges of the corresponding capacitor, the primary winding of the transformer, and the ratio of the primary winding to the secondary winding of the transformer in the components of the power circuit unit when the output power of the power circuit unit is 200 W to 1,000 W and a ratio of a calculated input voltage to a calculated output voltage is 0.2 to 1.0. According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/bucking adjustment based on the requirement of the output end, and can achieve an electric energy conversion rate of up to 98%. For details of specific experimental data of the parameters and test results, refer to Embodiments 1 to 18 in Table 1. Compared with a circuit with the same functions and the same electric energy conversion rate in the prior art, the power circuit of the present application uses significantly less components that those used by the circuit in the prior art, and has lower energy loss, lower costs, and higher circuit stability.

As an example rather than a limitation, in a case where the input voltage maximum of the power circuit unit is 50 V, the output voltage maximum is approximately 250 V, and the output power is 200 W, according to the above parameter design principle, the inductance parameter of the main inductor is designed to approximately 10 $\mu$H to 1 mH, the inductance parameter of the primary winding of the transformer is set to approximately 10 $\mu$H to 1 mH, the parameter of the capacitor is set to approximately 500 nF to 3,000 nF, and the ratio of the primary winding to the secondary winding of the transformer is set to approximately 1:5 to 1:2. In this case, the corresponding electric energy conversion rate is 97% or more.

Specifically, in this embodiment, the inductance of the primary winding of the transformer is set to 10 $\mu$H, or the inductance of the main inductor is designed to approximately 10 $\mu$H. This is because in a case of a 50 V input voltage, the energy stored in the main inductor and the primary side of the transformer during each energy storage cycle is very low. Only by significantly reducing the inductance of the primary winding of the transformer or the inductance of the main inductor, the primary winding of the transformer and the main inductor can store adequate energy during the energy storage cycle, so that the power circuit supplies an adequate power to the output end or the connected load. However, if the inductance of the primary winding of the transformer or the inductance of the main inductor is further reduced, an excitation current of the transformer may be significantly increased, leading to a significant decrease in conversion efficiency.

In this embodiment, the inductance ratio of the primary winding to the secondary winding of the transformer ranges approximately from 1:5 to 1:2. Since the input voltage maximum is only 50 V, if a 1:1 transformer is used, the duty cycle for operation of the switch needs to be increased to boost the output voltage. If a 300 V output voltage is required, the duty cycle needs to be increased to be greater than approximately 70%, to obtain an output voltage of approximately 300 V. In this case, the loss during the on state of the switch decreases excessively, resulting in low conversion efficiency of the power circuit. Using a boosting transformer whose inductance ratio of the primary winding to the secondary winding ranges from 1:5 to 1:2 can effectively reduce the duty cycle of the switch and improve the electric energy conversion efficiency.

Since the input voltage is relatively low, the capacitor requires a relatively large capacitance to ensure that adequate energy is stored in the primary winding of the transformer during the energy storage period.

If the parameter of the capacitor is set below 500 nF, when the output voltage changes dynamically, inadequate energy is stored in the capacitor at a part of power points, leading to a decrease in efficiency. If the capacitor is set at 3000 nF or more, a large voltage spike is observed when the switch is open. In this case, a switch with a better withstand voltage performance is required, which increases the costs.

As an example rather than a limitation, in a case where the input voltage maximum is 300 V, the output voltage maximum is approximately 300 V, and the output power is 1,000 W, according to the above parameter design principle, the inductance of the primary winding of the transformer is set to approximately 60 $\mu$H to 1 mH, the parameter of the capacitor is set to approximately 100 nF to 500 nF, and the ratio of the primary winding to the secondary winding of the transformer is set to approximately 1:1. In this case, the electric energy conversion rate of the corresponding power circuit unit is 98% or more.

In the application scenario of this embodiment, if a capacitor whose capacitance is less than 100 nF is selected, the capacitor may be unable to provide adequate energy to the primary winding of the transformer during the energy storage period in which the switch is closed, leading to a decrease in the conversion efficiency of the power circuit. If a capacitor whose capacitance is greater than 500 nF is selected, it is likely to cause a large charging current when the primary winding inductor of the transformer is charged during the energy storage period in which the switch is closed. At the moment when the switch is opened, a voltage spike is generated due to the primary leakage inductance of the transformer. As a result, a switch with a higher withstand voltage needs to be selected, increasing the costs.

As an example rather than a limitation, this embodiment may be applied to the solar photovoltaic field. With the input of 300 V DC power, the output of AC power whose peak is approximately 300 V, the output power of the power circuit unit is 1,000 W, and the input voltage maximum and the output voltage maximum are approximately 1:1, so that the inductance of the main inductor and the primary winding of the transformer should be selected to be relatively large. Smaller inductance may cause a decrease in the electric energy conversion efficiency. In practice, the inductance of the primary winding of the transformer is set to 60 $\mu$H, and the inductance of the main inductor is set to 1 mH, so that the electric energy conversion efficiency of the power circuit is up to 97.5% or more.

In addition, the energy during the energy storage period may be distributed between the transformer and the inductor. If the inductance of the main inductor is increased, and the inductance of the transformer is reduced, a proportion of energy stored in the primary winding of the transformer during the energy storage period in which the switch is closed is higher, and a proportion of energy stored in the inductor is lower. If the inductance of the inductor is reduced, and the inductance of the transformer is increased, a proportion of energy stored in the primary winding of the transformer during the energy storage period in which the switch is closed is lower, and a proportion of energy stored in the inductor is higher.

In the application scenario of this embodiment, the parameter of the capacitor is approximately 100 nF to 500 nF. In practice, if the capacitance of the capacitor is less than 100 nF, energy stored in the capacitor during the energy storage period in which the switch is closed is excessively low, and the capacitor cannot provide adequate energy to the primary winding of the transformer, leading to a decrease in the electric energy conversion efficiency of the power circuit. If the capacitance of the capacitor is greater than 500 nF, the capacitor stores excessive energy during the energy storage period in which the switch is closed, and is likely to cause a large charging current when charging the primary winding inductor of the transformer. At the moment when the switch is opened, a voltage spike is generated due to the primary leakage inductance of the transformer. As a result, a switch with a higher withstand voltage needs to be selected, increasing the costs.

In this embodiment, since the ratio of the input voltage maximum to the output voltage maximum is 1, the primary-secondary inductance of the transformer adopted is approximately 1:1. When the primary-secondary ratio of the transformer is close, costs can be reduced in a transformer manufacturing process, and the leakage inductance is easy to control.

Preferably, when a ratio of an input voltage maximum to an output voltage maximum of the power circuit unit is $V_{input} : V_{output}$ = 0.5 to 1.5, and an output power is 1,000 W to 2,000 W, primary inductance of the n transformers in the n circuit assemblies ranges from 30 $\mu$H to 1,000 $\mu$H, ratios of the primary windings to the secondary windings of the n transformers are $R_{primary} : R_{secondary}$ = 1:2 to 2:1,

Specifically, this embodiment provides parameter ranges of the corresponding capacitor, the primary winding of the transformer, and the ratio of the primary winding to the secondary winding of the transformer in the components of the power circuit unit when the output power of the power circuit unit is 1,000 W to 2,000 W and a ratio of a calculated input voltage to a calculated output voltage is 0.5 to 1.5.

According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/bucking adjustment based on the requirement of the output end, and can achieve an electric energy conversion rate of 97% or more or even 98% or more. For details of specific experimental data of the parameters and test results, refer to Embodiments 32 to 48 in Table 1. Compared with a circuit with the same functions and the same electric energy conversion rate in the prior art, the power circuit of the present application uses significantly less components than those used by the circuit in the prior art, and has lower energy loss, lower costs, and higher circuit stability.

As an example rather than a limitation, in a case where the input voltage is a 220 sine wave, that is, the input voltage maximum is approximately 311 V, the output voltage maximum is approximately 200 V, and the output power is 2,000 W, according to the above parameter design principle, the inductance range of the primary winding of the transformer is set to approximately 30 $\mu$H to 1 mH, the parameter range of the capacitor is set to approximately 500 nF to 3000 nF, and the ratio of the primary winding to the secondary winding of the transformer is set to approximately 2:1. In this case, the electric energy conversion rate of the power circuit unit may be 97% or more. Compared with a circuit with the same electric energy conversion rate in the prior art, the power circuit unit of the present application uses fewer components, has lower energy loss and higher stability, and is more energy-saving.

As an example rather than a limitation, in a case where the input voltage is a 380 V sine wave, that is, the input voltage maximum is approximately 540 V, the output voltage maximum is approximately 1,000 V, the ratio of the input voltage maximum to the output voltage maximum is approximately 0.5, and the output power is 1,000 W, according to the above parameter design principle, the inductance of the primary winding of the transformer is set to approximately 150 $\mu$H to 1 mH, the parameter of the capacitor is set to approximately 50 nF to 500 nF, and the ratio of the primary winding to the secondary winding of the transformer is set to approximately 1:2. In this case, the corresponding electric energy conversion rate is 98% or more.

Specifically, in this embodiment, if the output voltage is 1,000 V, the output voltage is excessively high. If a 1:1 transformer is used, the output voltage may be induced to the primary side of the transformer and superimposed with the voltage on the capacitor, resulting in an excessively high withstand voltage of the switch, which may damage the switch. If a 1:2 transformer is used, when the switch is open, after the 1,000 V output voltage is induced to the primary side, the primary voltage is only 500 V. After superimposition with the voltage on the capacitor, the withstand voltage of the switch during the turn-off period is significantly reduced, a switch selection range is extended, and the costs are significantly reduced. Therefore, the ratio of the primary winding to the secondary winding of the transformer needs to be set to 1:2. This configuration can significantly reduce the duty cycle for operation of the switch and improve the electric energy conversion efficiency of the power circuit. In addition, inducing the 1,000 V output voltage to the primary side via the transformer whose primary-secondary ratio is 1:2 can significantly reduce the withstand voltage of the switch during the turn-off period, extend the switch selection range, and significantly reduce the costs.

Preferably, when a ratio of an input voltage maximum to an output voltage maximum of the power circuit unit is $V_{input} : V_{output}$ = 5.0 to 8.0, and an output power is 1,000 W to 2,000 W, primary inductance of the transformer ranges from 50 $\mu$H to 250 $\mu$H, parameter of the capacitor ranges from 200 nF to 800 nF, and ratio of the primary winding to the secondary winding of the transformer is $R_{primary} : R_{secondary}$ = 2:1 to 5:1.

In this embodiment, parameter ranges of the corresponding capacitor, the primary winding of the transformer, and the ratio of the primary winding to the secondary winding of the transformer in the components of the power circuit unit when the output power of the power circuit unit is 1,000 W to 2,000 W and a ratio of a calculated input voltage to a calculated output voltage is 5.0 to 8.0 are provided.

According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/bucking adjustment based on the requirement of the output end, and can achieve an electric energy conversion rate of 97% or more or even 98% or more.

For details of specific experimental data of the parameters and test results, refer to Embodiments 19 to 31 in Table 1. In a case of the same function and the same electric energy conversion rate as that in the prior art, it is clear that the power circuit unit of the present application uses less components than those used in the prior art, and has lower energy loss, lower costs, and higher circuit stability.

As an example rather than a limitation, in a case where the input voltage is a 220 V sine wave, that is, the input voltage maximum is approximately 311 V, the output voltage maximum is approximately 40 V, and the output power is 1,000 W, according to the above parameter design principle, the inductance of the primary winding of the transformer is set to approximately 150 µH to 250 µH, the parameter of the capacitor is set to approximately 200 nF to 500 nF, and the ratio of the primary winding to the secondary winding of the transformer is set to approximately 5:1. In this case, the corresponding electric energy conversion rate is 96% or more.

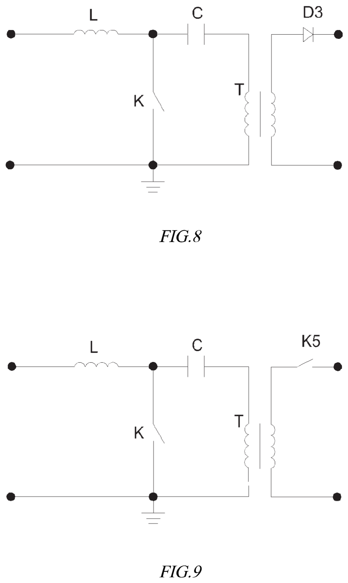

Specifically, in this embodiment, the output voltage is only 40 V, and the output half-wave rectifier module can use a switching device instead of a diode. In a case of a low voltage, the output current is relatively large, and a switching device with relatively low internal resistance needs to be selected, such as the fifth switch K5 shown in Figure 9. When selecting switching components, to replace diodes, the following issues need to be noted:

First, during the energy storage period when the switch is on, inducing the input voltage is stepped down to the secondary side of the 5:1 transformer and added to the output voltage of 40V. Therefore, the voltage withstand of the switching device that replaces the diode for half-wave rectification should be approximately equal to 311V/5 + 40V, which is about 102.2V. The voltage withstand of the selected switching component must exceed this value.

Second, in a case of a low voltage, the output current is relatively large, and a switching device with relatively low internal resistance needs to be selected.

Switching devices with fixed internal resistance can be employed, and by operating multiple switching devices in parallel, the total internal resistance can be effectively reduced. This approach enhances the conversion efficiency of the output half-wave rectification, thereby improving the overall conversion efficiency of the circuit unit.

As an example rather than a limitation, in a case where the input voltage is a 380 V sine wave, that is, the input voltage maximum is approximately 540 V, the output voltage maximum is approximately 100 V, the ratio of the input voltage maximum to the output voltage maximum is approximately 5:1, and the output power is 2,000 W, according to the above parameter design principle, the inductance of the primary winding of the transformer is set to approximately 50 µH to 150 µH, the parameter of the capacitor is set to approximately 400 nF to 800 nF, and the ratio of the primary winding to the secondary winding of the transformer is set to approximately 2:1. In this case, the corresponding electric energy conversion rate is 97% or more.

In this embodiment, the input voltage of the power circuit unit is relatively high, the output voltage is relatively low, and the output current is relatively large. In practice, using a 1:1 transformer may result in an excessively small duty cycle and an excessively low frequency of the switch, leading to low conversion efficiency of the transformer and consequently a decrease in the overall electric energy conversion efficiency of the power circuit unit. Using a transformer whose primary-secondary ratio is approximately 2:1 to 3:1 can well solve this problem and improve the conversion efficiency of the circuit. It should be noted that the primary leakage inductance of the transformer whose primary-secondary ratio is 2:1 to 3:1 may increase. If the primary leakage inductance is excessively large, a voltage spike may be generated at the moment when the switch is opened. This may damage the switch, or require use of a switch with a higher withstand voltage, increasing the costs. It is recommended herein to use a copper foil as a primary/secondary winding and use a process of winding the primary winding and the secondary winding in parallel to manufacture the transformer, to reduce the primary and secondary leakage inductance of the transformer.

In this embodiment, the output voltage is only 100 V, and it is recommended to use the switching component instead of the diode for output half-wave rectification, such as the fifth switch K5 shown in Figure 9. In addition, consideration may be given to configuring the switch of the power circuit unit as a switch assembly formed by connecting a plurality of switching devices in parallel, to reduce the conduction loss.

Preferably, when a ratio of an input voltage maximum to an output voltage maximum of the power circuit unit is $V_{input} : V_{output} = 2.0$ to $5.0$, and an output power is 2,000 W to 10,000 W, primary inductance of the n transformers in the n circuit assemblies ranges from 50 µH to 250 µH, ratios of the primary windings to the secondary windings of the n transformers are $R_{primary} : R_{secondary} = 1:1$ to $2:1$.

Specifically, this embodiment provides parameter ranges of the corresponding capacitor, the primary winding of the transformer, and the ratio of the primary winding to the secondary winding of the transformer in the components of the power circuit unit when the output power of the power circuit unit is 1,000 W to 2,000 W and a ratio of a calculated input voltage to a calculated output voltage is 2.0 to 5.0.

According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/bucking adjustment based on the requirement of the output end, and can achieve an electric energy conversion rate of 96% or more or even 98% or more. For details of specific experimental data of the parameters and test results, refer to Embodiments 49 to 59 in Table 1. Compared with a circuit with the same functions and the same electric energy conversion rate in the prior art, the power circuit of the present application uses significantly less components than those used by the circuit in the prior art, and has lower energy loss, lower costs, and higher circuit stability.

As an example rather than a limitation, in a case where the input voltage is 600 V to 1,000 V, the output voltage is 220 V to 380 V, and the output power is 2,000 W to 10,000 W, according to the above parameter design principle, the inductance of the primary winding of the transformer is set to approximately 50 μH to 250 μH, the parameter of the capacitor is set to approximately 100 nF to 800 nF, and the ratio of the primary winding to the secondary winding of the transformer is set to approximately 1:1 to 2:1. In this case, the corresponding electric energy conversion rate is 96% or more. If the inductance of the primary winding of the transformer is less than 50 μH, the frequency of the switching transistor is excessively high, switching transistors such as an IGBT cannot be used, and the costs are further increased. If the inductance is higher than 250 μH, the entire circuit may be unable to output an adequate power, or the switch needs to operate at an extremely low frequency, reducing the conversion efficiency of the transformer. In a case of the same power and the same efficiency as that in the prior art, the number of components of the power circuit unit of the present application is far less than that of a circuit in the prior art, and the costs are far lower than the costs of the product in the prior art.

Preferably, when the input power supply provides AC power, the power circuit further includes an input rectifier module configured to rectify the AC power into DC power.

Specifically, when the input power supply provides AC power, the AC power of the input power supply needs to be rectified, and the DC power obtained through rectification flows into the inductor of the power circuit unit. In practice, an AC voltage may be 220 V or another value. Depending on a difference of a single-phase or three-phase connection method, a value of a provided AC voltage may be changed. For example, the three-phase power is 380 V. To adapt to a practical AC power operating environment, the power circuit of the present application needs to perform rectification via the input rectifier module. A specific implementation manner of the rectifier module is not limited. Any solution in which rectification can be implemented in the prior art or future technology shall fall within the scope of protection of the present application, provided that the solution can be directly applied to the power circuit unit in this embodiment or can be applied to the power circuit unit in this embodiment after adaptive modifications made by a person skilled in the art on the solution without creative efforts.

Preferably, the input rectifier module of the power circuit is a full-wave rectifier circuit or a half-wave rectifier circuit.

Specifically, when the input rectifier module uses full-wave rectification, the sinusoidal AC power is rectified into pulsating DC power, and a frequency of the pulsating DC power obtained through rectification is doubled. A specific circuit for implementing full-wave rectification is not limited. Any solution in which full-wave rectification can be implemented in the prior art or the future technology shall fall within the scope of protection of the present application, provided that the solution can be directly applied to full-wave rectification performed by the rectifier module for the input power supply in this embodiment when the input power supply provides the AC power or can be applied to this embodiment after adaptive modifications made by a person skilled in the art on the solution without creative efforts,

Preferably, the power circuit unit further comprises an output half-wave rectifier module. One end of the output half-wave rectifier module is connected to one end of the secondary winding of the transformer, wherein the other end of the output half-wave rectifier module and the other end of the secondary winding of the transformer serve as the output ends of the power circuit unit.

Specifically, the output half-wave rectifier module is connected to one end of the secondary winding of the transformer, which corresponds to the end of the primary winding connected to the capacitor. It rectifies the output current of the power circuit unit to meet the requirements of the load connected to the power circuit.

Preferably, the half-wave rectifier module in the power circuit unit implements half-wave rectification by a diode.

Specifically, as shown in FIG. 8, the half-wave rectifier module provided in this embodiment is connected to one end of the secondary winding of the transformer. A specific working principle of the half-wave rectifier module is as follows: After the switch of the power circuit unit is switched from a closed state to an open state, the inductor and the primary winding of the transformer begin to discharge. The secondary winding of the transformer acquires electric energy from the current change in the primary winding by induction. In this case, the current in the secondary winding of the transformer is output to the electrolytic capacitor or the load by the half-wave rectifier module for electric energy provision or energy storage.

When the switch of the power circuit unit is switched from the open state to the closed state, the capacitor forms an equivalent LC resonant loop with the primary winding of the transformer and the switch. Since the capacitor does not allow an abrupt voltage change, the capacitor and the primary winding of the transformer form resonance at this point. Due to the provision of the half-wave rectifier module at the secondary winding of the transformer, no loop can be formed, and no induced current is generated in the secondary winding when the primary winding of the transformer, the capacitor, and the closed switch form a resonant circuit.

It can be learned that a specific circuit or component for implementing half-wave rectification is not limited, provided that the half-wave rectifier module can implement unidirectional conduction of the current in the secondary winding of the transformer. Any solution of a circuit that can implement half-wave rectification in the prior art or the future technology shall fall within the scope of protection of the present application, provided that the solution can be directly applied to half-wave rectification performed by the rectifier module for the input power supply in this embodiment when the input power supply provides the AC power or can be applied to this embodiment after adaptive modifications made by a person skilled in the art on the solution without creative efforts, for example, a diode/MOS transistor with a unidirectional conduction function, and a switching transistor controlled to be conducted unidirectionally.

Furthermore, as shown in FIG. 8, this embodiment achieves unidirectional output from the secondary winding of transformer T by connecting a third diode D3 to the corresponding output end of the secondary winding. The diode inherently possesses the property of unidirectional conduction. Utilizing the diode to achieve half-wave rectification results in a simple control circuit and stable performance.

Preferably, as shown in FIG. 9, the output half-wave rectifier module of the power circuit unit is implemented using a fifth switch K5 and a fifth controller that controls K5 to achieve output half-wave rectification. T he fifth controller controls the operating mode of the fifth switch according to the inducing mode of electric energy in the secondary winding of the transformer controlled by the controller of the power circuit unit.

Specifically, this embodiment employs the fifth switch K5 to achieve half-wave rectification for the output of the transformer's secondary winding, with the operation of the fifth switch K5 controlled by the fifth controller. Furthermore, the operating state of the fifth switch K5 determines whether the secondary winding of the transformer can form a loop

To be specific, when the fifth switch K5 is open, no loop can be formed; and when the fifth switch K5 is closed, a loop can be formed.

In addition, after the switch of the power circuit is closed, when the capacitor of the circuit assembly charges the primary winding of the transformer, and forms resonance with the primary winding of the transformer, the secondary winding of the transformer cannot form a loop. In other words, in this case, the fifth switch K5 needs to be opened. The fifth controller needs to control the operating state of the fifth switch K5 based on the operating state of the switch in the power circuit. Based on the above analysis, when the switch of the circuit group is in the closed state, the fif controller needs to control the fifth switch K5 to be in the open state.

This embodiment achieves half-wave rectification function at the secondary winding output of the transformer by implementing a fifth controller and its corresponding fifth switch. Compared with the diode, the switch has lower energy loss and a higher electric energy conversion rate. As an example rather than a limitation, in scenarios where the output voltage is relatively low, such as lower than 100 V, employing a diode for half-wave rectification leads to a disproportionately high voltage drop, which reduces conversion efficiency.

In such cases, switching devices can be used to realize the output half-wave rectification function at the secondary side of the transformer. Here, switching devices with fixed internal resistance can be employed. Additionally, multiple switches may be connected in parallel to reduce power losses during half-wave rectification, thereby further improving power conversion rate.

Preferably, the switch of the power circuit is implemented by a bidirectional switch or a controllable switching device.

In practice, type selection of a switch component is also related to setting of the operating frequency of the switch. For an ordinary silicon-based MOS transistor, a maximum recommended frequency is limited to 150 kHz. For a silicon carbide MOS transistor, a maximum recommended frequency is limited to 500 kHz. For an IGBT switching transistor, a maximum recommended frequency is limited to 40 kHz. For a gallium nitride MOS transistor, a maximum recommended frequency is limited to 800 kHz. The switch in this embodiment is a commercially available high-frequency switch with a withstand voltage of 150 V, for example, a high-frequency switch whose model is NCEP15T14, and a corresponding operating frequency of the switch ranges from 50 kHz to 200 kHz.

Specifically, the switch of the power circuit undertakes a circuit connection or disconnection function based on the control information from the controller. Herein, a specific manner in which the controller controls the switch is not limited, that is, a manner, means, etc. through which the controller provides a control signal to the switch is not limited, which may be wireless or wired. Any solution in which control signal transmission from the controller to the switch can be implemented in the prior art or the future technology shall fall within the scope of protection of the present application, provided that the solution can be directly applied to control signal transmission from the controller to the switch controlled by the controller in this embodiment or can be applied to this embodiment after adaptive modifications made by a person skilled in the art on the solution without creative efforts.

Further, a specific form of the switch, the controller, or the switch and the controller of the switch for implementing circuit connection and disconnection in the power circuit is also not limited. Any solution of a switch, a controller, or a switch and a controller of the switch that can implement circuit connection and disconnection in the prior art or the future technology shall fall within the scope of protection of the present application, provided that the solution can be directly applied to a function of circuit connection and disconnection in the power circuit in this embodiment or can be applied to this embodiment after adaptive modifications made by a person skilled in the art on the solution without creative efforts.

Preferably, a range of a leakage inductance value of the transformer of the power circuit is less than 1.5%.

Specifically, during the operation of the power circuit, when the switch is closed, the input power supply charges the main inductor. At the moment when the switch is opened, the current in the primary winding of the transformer changes significantly. In this case, leakage inductance of the transformer may cause a large voltage peak across the switch, resulting in a probability of breakdown and damage of the switch. To ensure a high electric energy conversion rate and better stability of the power circuit, an optimal range of the leakage inductance value of the transformer is less than 1.5%.

Further, a specific structure of the transformer of the power circuit of the present application is not limited herein. Any solution of a transformer structure that can realize leakage inductance of less than 1.5% in the prior art or the future technology shall fall within the scope of protection of the present application, provided that the solution can be directly applied to a function of the transformer in the power circuit unit of this embodiment or can be applied to this embodiment after adaptive modifications made by a person skilled in the art on the solution without creative efforts.

Preferably, the transformer of the power circuit has a structure of a copper foil or a U-shaped metal sheet, and a parallel winding.

Thus, voltage spikes induced by the leakage inductance of transformer T during switch turn-off can be effectively reduced, thereby protecting the switch. Consequently, the power circuit of the present application can operate under operating conditions with higher power.

Specifically, this embodiment discloses the structure and the winding manner of the transformer of the power circuit. A magnetic core structure of the transformer is a thin metal sheet or a U-shaped metal sheet, preferably a copper sheet. The winding manner for the primary side and the secondary side of the transformer is a parallel winding manner. In this way, the leakage inductance of the transformer can be reduced, and an operation requirement of the power circuit can be met.

As shown in FIG. 5, the present application further provides a first extended power circuit. When the input power supply is alternating current, it comprises two power circuit units, including the aforementioned two power circuit units. The first extended power circuit comprises a first power circuit unit, a second power circuit unit, a first information acquisition module for collecting voltage/current information at the input and output ends of the first extended power circuit, a first diode D1 and a second diode D2 respectively connected to the first and second power circuit units, and a first control center connected to the first information acquisition module and configured to control the operating states of switches in the first/second power circuit unit.

Specifically, the first power circuit unit X1 comprises a first inductor L1, a first switch K1, a first transformer T1, and a first output half-wave rectifier module; the second power circuit unit X2 comprises a second inductor L2, a second switch K2, a second transformer T2, and a second output half-wave rectifier module.

Specifically, in this embodiment, the first information acquisition module collects voltage/current information from the input power supply of the first extended power circuit as well as current/voltage information from its output ends. The first information acquisition module then transmits the collected input and output voltage/current data to the first control center. Based on the received information, the first control center generates control information for the first and second switches and transmits them to the first/second switches, commanding them to execute instruction information such as duty cycle, frequency, and operating state specified in the control information.

As shown in FIG. 5, both ends of the input power supply are respectively connected to the anodes of the first diode D1 and the second diode D2 and grounded. The cathode of the first diode D1 is connected to one end of the first inductor L1 of the first power circuit unit X1. The other end of the first inductor L1 is connected to one end of both the first switch K1 and the first capacitor C1. The other end of the first capacitor C1 is connected to one end of the primary winding of the first transformer T1, while the other end of the primary winding of transformer T1 and the other end of the first switch K1 are both grounded.

The cathode of the second diode D2 is connected to one end of the second inductor L2 of the second power circuit unit X2. The other end of the second inductor L2 is connected to one end of both the second capacitor C2 and the second switch K2. The other end of the second capacitor C2 is connected to one end of the primary winding of the second transformer T2, and the other end of the primary winding of transformer T2 as well as the other end of the second switch K2 are both grounded.

Specifically, this embodiment illustrates a configuration where the power circuit achieves input half-wave rectification for each power circuit unit by connecting two diodes, D1 and D2, to the two respective power circuit units. As shown in FIG. 5, the diagram presents the components and their connection scheme included in the first and second power circuit units within the power circuit of this embodiment.

The loops formed during the operating process of the power circuit disclosed in this embodiment include:

Loop 1 (Input power supply + inductor L1 + capacitor C1 + transformer T1),
loop 2 (Input power supply + inductor L1 + switch K1), and
loop 3 (Capacitor C + transformer T1 + switch K1).

The detailed operating process of the power circuit disclosed in this embodiment is as follows:
When the input power supplies current to the anode of the first diode D1, the first control center controls the switch K2 of the second power circuit unit X2 to be in an open state, such that the first power circuit unit X1 operates normally.

At this point, the operating process of the first power circuit unit X1 is as follows: When switch K1 is closed, the input power supply charges inductor L1, and inductor L1 store energy. At a moment when the switch K1 is opened, the inductor L1 generates a high voltage to avoid an abrupt change in a current across the inductor, and transmits the electric energy through the loop 1 newly formed after the switch K is opened. The inductor L1 charges capacitor C1, and induces energy to the secondary winding of transformer via the first transformer T1. At this moment, the input voltage plus the voltage across inductor L1 equals the voltage across capacitor C1 plus the voltage across the primary winding of transformer T1, expressed as:

$$V_{input} + V_{L1} = V_{C1} + V_{T1\_primary}$$

The first transformer T1 then induces the electric energy to its secondary winding. The secondary winding delivers electric energy through the output half-wave rectifier module to the power supply output ends of the power circuit unit, thereby providing power to the load.

When the first switch K1 is switched from the open state to the closed state, the loops the circuits formed in sequence and the specific operating process are as follows: The power circuit charges inductor L1 through loop 2, and charges the primary winding of transformer T1 via capacitor C1 through loop 3.

Since an output half-wave rectifier module is connected in the secondary winding loop of the first transformer T1, energy cannot be transferred to the secondary winding at this stage.

At this time, the primary winding of transformer T1 and capacitor C1 equivalently form an LC resonant circuit, preserving the energy within the loop. Simultaneously, once switch K1 is closed, the input power supply charges inductor L1 through loop 2, preparing inductor L1 for the next cycle of energy storage.

Until the half sine wave period provided by the input power supply ends, the first control center turns off the first switch K1. The input power then supplies the reverse current of the sine wave to the second inductor L2, and the second power circuit unit X2 begins normal operation. The working principle and process of the second power circuit unit X2 here are entirely consistent with those of the aforementioned first power circuit unit X1 and are correspondingly referenced herein, without further elaboration.

In this embodiment, by using two diodes respectively connected to two power circuit units and controlling them via the first control center, when the input power supplies forward input current, one power circuit unit (e.g., the first) operates normally; when it supplies reverse input current, the other power circuit unit (e.g., the second) operates normally. This means both sets of power circuits can function effectively simultaneously. Compared with the solution where the input power is supplied to the power circuit through full-bridge rectification (as specifically shown in FIG. 4), this embodiment reduces the number of diodes used, further lowers energy consumption, and improves power conversion rate. Additionally, in high-power scenarios, the two power circuit units include two transformers and two switches, enabling more uniform heat dissipation for the transformers and switches, thereby effectively addressing the issue of excessive heat concentration in the transformers and switches.

The present application further provides a second extended power circuit. When the input power is alternating current, the second extended power circuit comprises the aforementioned two power circuit units, specifically a third power circuit unit and a fourth power circuit unit, a second information acquisition module for collecting voltage/current information at the input and output ends of the second extended power circuit, and a second control center connected to the second information acquisition module for controlling the operating states of switches in the third/fourth power circuit unit.

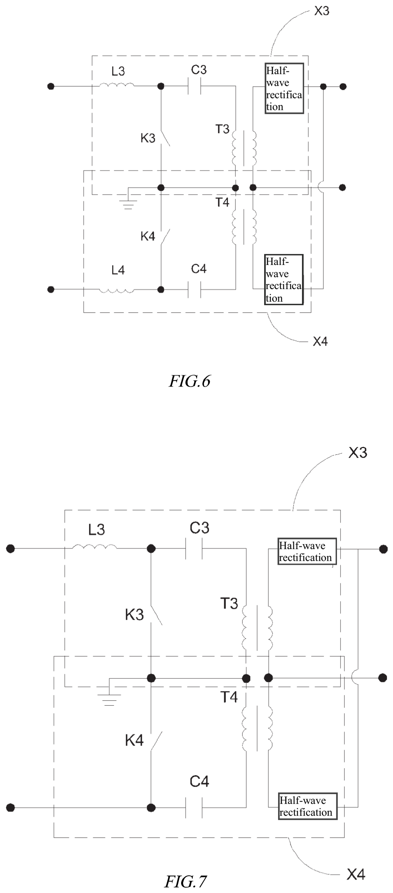

As shown in FIG. 6, the third power circuit unit X3 comprises a third inductor L3, a third capacitor C3, a third switch K3, and a third transformer T3. The fourth power circuit unit X4 comprises a fourth inductor L4, a fourth switch K4, a fourth capacitor C4, and a fourth transformer T4.

Continuing with FIG. 6, the two ends of the input power supply are connected to one end of the third inductor L3 and one end of the fourth inductor L4, respectively. The other end of the fourth inductor L4 is connected to the fourth capacitor C4 and one end of the fourth switch K4. The other end of the third inductor L3 is connected to one end of the third capacitor C3 and one end of the third switch K3. The other end of the third capacitor C3 is connected to the input end of the primary winding of the third transformer T3. The output end of the primary winding of the third transformer T3 is connected to the other end of the third switch K3, the other end of the fourth switch K4, and the output end of the primary winding of the fourth transformer T4, and then grounded. The input end of the primary winding of the fourth transformer T4 is connected to the other end of the fourth capacitor C4.

Specifically, this embodiment presents an implementation of the second extended power circuit under conditions without employing a rectification module when the input power supply provides AC power. As detailed in Figure 6, it illustrates the components and their interconnection within the third power circuit unit X3 and the fourth power circuit unit X4 included in the power circuit of this embodiment.

The loops formed during the operating process of the power circuit disclosed in this embodiment include:

Loop 1 (Input power supply + the third inductor L3 + the third capacitor C3 + the third transformer T3 + the fourth switch K4 + the fourth inductor L4),

loop 2 (Input power supply + the third inductor L3 + the third switch K3 + the fourth switch K4 + the fourth inductor L4), and

loop 3 (The third capacitor C3 + the third transformer T3 + the third switch K3). The detailed operating process of the power circuit disclosed in this embodiment is as follows:

When the input power supplies current to the third power circuit unit X3, the second control center controls the fourth switch K4 of the fourth power circuit unit X4 to remain in the closed state, allowing the third power circuit unit X3 to operate normally, which serves as the first stage of the power circuit's working process.

At this point, the working process of the first stage of the power circuit is as follows: When the second control center closes the third switch K3 of the third power circuit unit X3, the input power supply charges the third inductor L3 and the fourth inductor L4, allowing them to store energy. At the instant the third switch K3 opens, the third inductor L3 and the fourth inductor L4 begin to discharge. To prevent abrupt changes in the current across their terminals, both the third inductor L3 and the fourth inductor L4 generate a high voltage. This electric energy is then transferred through the loop 1 newly formed after K3 opens. Both the third inductor L3 and the fourth inductor L4 charge the third capacitor C3. Through the change in primary current of the third transformer T3, the electric energy is induced to the secondary side of the third transformer T3. At this moment, the sum of the input voltage, the voltage across the third inductor L3, and the voltage across the fourth inductor L4 equals the sum of the voltage across the third capacitor C3 and the voltage across the primary winding of the third transformer T3, expressed as:

$$V_{input} + V_{L3} + V_{L4} = V_{C3} + V_{T3\_primary}.$$

The third transformer T3 transfers the energy to its secondary winding. The secondary winding then delivers the power to the electric energy output ends of the second extended power circuit through the output half-wave rectifier module, thereby supplying energy to the load.

When the third switch K3 is switched from the open state to the closed state, the loops formed in sequence in the second extended power circuit and the specific working process are as follows: the power circuit charges the third inductor L3 and the fourth inductor L4 through loop 2; meanwhile, the third capacitor C3 charges the primary winding of the third transformer T3 through loop 3.

Since an output half-wave rectifier module is connected in the secondary winding loop of the third transformer T3, energy cannot be transferred to the secondary winding at this stage.

Therefore, the primary winding of the third transformer T3 and the third capacitor C3 resonate to maintain the electric energy in the circuit. Simultaneously, after the third switch K3 is in the closed state, the input power supply charges the third inductor L3 and the fourth inductor L4 through loop 2, allowing the third inductor L3 and the fourth inductor L4 to store energy for the next cycle.

Until the half sine wave period provided by the input power supply ends, the second control center turns off the first switch K3 of the third power circuit unit X3. The input power supplies the reverse current of the sine wave to the fourth inductor L4 of the fourth power circuit unit X4, and the the fourth power circuit unit X4 begins normal operation, which serves as the second stage of the power circuit's working process.

The specific working principle and process of the power circuit in the second stage (normal operation of the fourth power circuit unit X4) are entirely consistent with those described for the normal operation of the third power circuit unit X3 in its first stage and are correspondingly referenced herein, without further elaboration here.

In this embodiment, when the input power supply is alternating current, the power circuit does not employ a rectifier module. Instead, by configuring two sets of "mirror-linked" power circuits, the third inductor L3 and the fourth inductor L4 are charged and discharged simultaneously regardless of whether the input power supply is forward input current or reverse input current. That is, the two inductors L3 and L4 are effectively connected in series. Compared with a power circuit that includes a rectifier module, this configuration eliminates the rectifier circuitry, thereby avoiding the associated energy loss. As a result, the power conversion efficiency is further improved, and the overall circuit performance is enhanced. Additionally, in high-power scenarios, the two power circuit units include two transformers and two switches, enabling more uniform heat dissipation for the transformers and switches, thereby effectively addressing the issue of excessive heat concentration in the transformers and switches.

The present application further provides a third extended power circuit. When the input power is alternating current, the third extended power circuit comprises the aforementioned second extended power circuit with the inductor omitted in either the third or the fourth power circuit unit. As shown in FIG. 7, taking the omission of the inductor in the fourth power circuit unit as an example, the third extended power circuit includes a third power circuit unit and a fourth power circuit unit without the inductor. In this case, the third extended power circuit comprises the third power circuit unit, the fourth power circuit unit without the fourth inductor, a third information acquisition module for collecting voltage/current information at the input and output terminals of the third extended power circuit, and a third control center connected to the third information acquisition module for controlling the operating states of switches in the third/fourth power circuit unit.

Specifically, the third power circuit unit X3 comprises a third inductor L3, a third capacitor C3, a third switch K3, a third transformer T3, and an output half-wave rectifier module; the fourth power circuit unit X4 with the inductor omitted comprises a fourth capacitor C4, a fourth switch K4, a fourth transformer T4, and an output half-wave rectifier module.

In this embodiment, the connection scheme of the components in the third power circuit unit and the inductor-omitted fourth power circuit unit within the third extended power circuit is identical to that of the third and fourth power circuit units described in the aforementioned second extended power circuit, except that the fourth inductor L4 is omitted in the fourth power circuit unit. Here, the fourth inductor L4 is simply removed, and the two terminals originally connected to L4 are directly linked by a wire.

This embodiment presents an implementation of the third extended power circuit for AC input without employing a rectification module, building upon the solution that includes the third and fourth power circuit units by omitting either the third inductor L3 or the fourth inductor L4.

The loops formed during the operating process of the power circuit disclosed in this embodiment include:

Loop 1 (input power supply + the third inductor L3 + the third capacitor C3 + the third transformer T3 + the fourth switch K4),
loop 2 (input power supply + the third inductor L3 + the third switch K3 + the fourth switch K4),
loop 3 (the third capacitor C3 + the third transformer T3 + the third switch K3),
loop 4 (input power supply + the third inductor L3 + the fourth capacitor C4 + the fourth transformer T4 + the third switch K3),
loop 5 (input power supply + the third inductor L3 + the third switch K3 + the fourth switch K4),
loop 6 (the fourth capacitor C4 + the fourth transformer T4 + the fourth switch K4).

The detailed operating process of the power circuit disclosed in this embodiment is as follows:
When the input power supplies current to the third power circuit unit X3, the third control center controls the fourth switch K4 of the fourth power circuit unit X4 to remain in the closed state, allowing the third power circuit unit X3 to operate normally, which serves as the first stage of the power circuit's working process.

At this point, the working process of the first stage of the third extended power circuit is as follows: The specific working process of the power circuit during this stage is as follows: When the third control center closes the third switch K3 of the third power circuit unit X3, the input power supply charges the third inductor L3 and the third inductor L3 stores energy. At the instant the third switch K3 opens, the third inductor L3 begins to discharge. To prevent abrupt changes in the current across its ends, the third inductor L3 generates a high voltage. This electric energy is then transferred through the loop 1 newly formed after K3 opens, so the third inductor L3 charges the third capacitor C3. Through the change in primary current of the third transformer T3, the electric energy is induced to the secondary side of the third transformer T3. At this moment, the sum of the input voltage plus the voltage across the third inductor L3 equals the voltage across the third capacitor C3 plus the voltage across the primary winding of the third transformer T3, expressed as:

$$V_{input} + V_{L3} = V_{C3} + V_{T3\_primary}.$$

The third transformer T3 transfers the energy to its secondary winding. The secondary winding then delivers the power to the electric energy output ends of the second extended power circuit through the output half-wave rectifier module, thereby supplying energy to the load.

When the third switch K3 is switched from the open state to the closed state, the loops formed in sequence in the third extended power circuit and the specific working process are as follows: the power circuit charges the third inductor L3 through loop 2; meanwhile, the third capacitor C3 charges the primary winding of the third transformer T3 through loop 3.

Since an output half-wave rectifier module is connected in the secondary winding loop of the third transformer T3, energy cannot be transferred to the secondary winding at this stage.

At this point, the primary winding of the third transformer T3 and the third capacitor C3 form an equivalent LC resonate circuit to maintain the electric energy in the circuit. Simultaneously, after the third switch K3 is in the closed state, the input power supply charges the third inductor L3 through loop 2, allowing the third inductor L3 to store energy for the next cycle.

Until the half sine wave period provided by the input power supply ends, the third control center turns off the third switch K3 of the third power circuit unit X3. The input power then supplies the reverse current of the sine wave to the fourth power circuit unit X4 with the inductor omitted, and the fourth power circuit unit X4 with the inductor omitted begins normal operation, which serves as the second stage of the power circuit's working process.

At this point, the working process of the second stage of the power circuit is as follows: When the third control center closes the fourth switch K4 of the fourth power circuit unit, the input power supply charges the third inductor L3, and the third inductor L3 stores energy. At the instant the fourth switch K4 opens, the third inductor L3 begins to discharge. To prevent abrupt changes in the current across its ends, the third inductor L3 generates a high voltage. This electric energy is then transferred through the loop 4 newly formed after the fourth switch K4 opens. The third inductor L3 charges the fourth capacitor C4. At this moment, the input voltage plus the voltage across the third inductor L3 equals the voltage across the fourth capacitor C4 and the voltage across the primary winding of the fourth transformer T4, expressed as:

$$V_{input} + V_{L3} = V_{C4} + V_{T4\_primary}.$$

The fourth transformer T4 transfers the energy to its secondary winding. The secondary winding then delivers the power to the electric energy output ends of the second extended power circuit through the output half-wave rectifier module, thereby supplying energy to the load.

When the fourth switch K4 is switched from the open state to the closed state, the loops formed in sequence in the third extended power circuit and the specific working process are as follows: the power circuit charges the third inductor L3 through loop 5; meanwhile, the fourth capacitor C4 charges the primary winding of the fourth transformer T4 through loop 6.

Since an output half-wave rectifier module is connected in the secondary winding loop of the fourth transformer T4, energy cannot be transferred to the secondary winding at this stage.

At this point, the primary winding of the fourth transformer T4 and the fourth capacitor C4 form an equivalent LC resonate circuit to maintain the electric energy in the circuit. Simultaneously, after the fourth switch K4 is in the closed state, the input power supply charges the third inductor L3 through loop 2, allowing the third inductor L3 to store energy for the next cycle.

Until the half sine wave period provided by the input power supply ends, the power circuit enters the next first stage of the working process.

The second extended power circuit of this embodiment represents a further optimization/modification of the aforementioned circuit comprising both the third and fourth power circuit units. Specifically, the inductor in either the third or the fourth power circuit unit is omitted. This allows that, regardless of whether the input current is a forward or reverse input current, after a single inductor is charged, it can discharge to either the combination of the third capacitor C3 and the primary winding of the third transformer T3 or the combination of the fourth capacitor C4 and the primary winding of the fourth transformer T4, depending on the direction of the AC output current. In other words, this solution eliminates the rectifier module circuit while enabling one inductor to supply power to two different loops. This reduces energy loss, lowers circuit cost, significantly improves power conversion rate, and results in better overall circuit performance.

Preferably, the electric energy output ends of the first power circuit unit is connected in series or in parallel with the electric energy output ends of the second power circuit unit.

Specifically, as shown in FIG. 5, the electric energy output ends of the first power circuit unit X1 is the output end of the secondary winding of transformer T1 after passing through the output half-wave rectifier module, while the electric energy output ends of the second power circuit unit X2 is the output end of the secondary winding of transformer T2 after passing through the output half-wave rectifier module.

In this embodiment, the first power circuit unit X1 and the second power circuit unit X2 operate intermittently based on the waveform of the sinusoidal AC input power, meaning they do not output electric energy simultaneously. Their output ends can be used individually as output ends providing electric energy, or they can be connected in parallel or in series. Connecting the outputs in parallel increases the output current and output power of the power circuit, ensuring continuous power output throughout the entire sinusoidal AC cycle. Connecting the outputs in series expands the range of output voltage and output power of the power circuit, likewise ensuring continuous power output throughout the entire sinusoidal AC cycle.

Preferably, as shown in FIGS. 6 and 7, the method and principle for connecting the electric energy output ends of the third power circuit unit and the fourth power circuit unit in series or in parallel are the same as those described above for the series/parallel connection of the output terminals of the first power circuit unit and the second power circuit unit, which will not be repeated here.

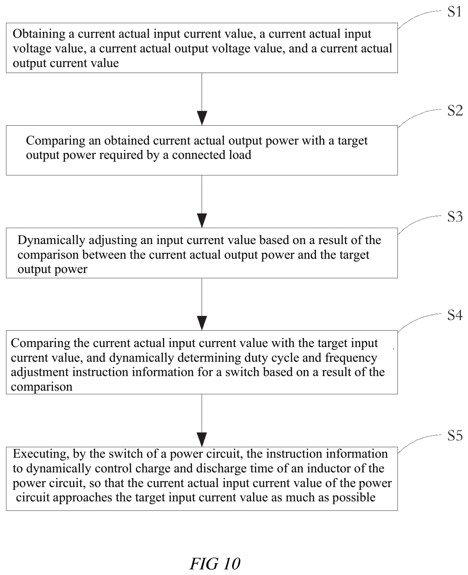

As shown in Figure 10, the present application further provides a method for a power circuit to simultaneously achieve power factor correction and boosting/bucking conversion. The power circuit is the aforementioned power circuit, the first extended power circuit, the second extended power circuit, or the third extended power circuit. The method comprises

Step S1: Obtain a current actual input current value, a current actual input voltage value, a current actual output voltage value, and a current actual output current value.

Specifically, in S1, it is necessary to dynamically collect and obtain the current actual input and actual output conditions of the power circuit unit. The specific method for acquiring or collecting such information is not limited; it may be obtained through the acquisition unit of the controller or by other means. The collected information is then transmitted to the controller. The frequency of dynamic acquisition may be referenced to the switching frequency of the power circuit unit, for example, it may be equal to or lower than the switching frequency. Here, the frequency acquired dynamically can be adjusted according to actual conditions, with no specific limitation imposed. Additionally, based on the practical application scenario, the required voltage/current/power values of the load connected to the power circuit unit are also obtained.

Step S2: Compare the obtained current actual output power with the target output power required by the connected load.

In step S2, the obtained current actual output power is compared with the target output power required by the connected load. When a usage scenario of the connected load or the power circuit is determined, the corresponding required target output power and target output voltage/current are relatively fixed. The current actual output power is compared with the target output power. When the current actual output power is greater than the target output power, it indicates that the actual output power is higher than the target output power, and the actual output power needs to be decreased. When the actual output power is less than the target output power, it indicates that the actual output does not meet the requirement for the target output power, and the actual output power needs to be increased.

Step S3: Based on the comparison result between the current actual output power and the target output power, dynamically determine the target input current value. Preferably, S3 comprises:

S31: Dynamically adjust the peak input current according to the comparison result from S2;
S32: Dynamically determine the target input current value based on the adjusted peak input current from S31 and the phase information of the current input.

In S31, based on the comparison result between the actual output power and the target output power, the peak input current [I_in_peak] is dynamically determined. If the actual output power is less than the target output power, the peak input current is increased to raise the current actual output voltage or current, thereby boosting the actual output power to meet the load demand. Conversely, if the actual output power exceeds the target output power, the peak input current is reduced to lower the current actual output voltage or current, thereby decreasing the output power to align with the load requirement. The magnitude of the increase or decrease in the peak input current should take into account the discrepancy between the actual output power and the target output power. For example, if the difference exceeds a preset threshold, the increment of the peak input current may be amplified to rapidly satisfy the load demand, and so forth. The determination of the peak input current is a dynamic and continuously adjusted process. The specific method for defining the magnitude of increase or decrease is not restricted, as long as it serves to fulfill the target output requirements of the load side.

Specifically, in S32, the target input current value [I_target_input] is dynamically determined based on the peak input current [I_in_peak] and the current input phase information [current input voltage / peak input voltage], where I_target_input = I_in_peak × phase information. Here, the current input phase information is a ratio of the current actual input voltage provided by the current input power supply to the power circuit to a peak of the periodically fluctuating voltage provided by the input power supply to the power circuit. The target input current value is a product of the input current peak determined in step S31 above and the phase information, that is:

$$I_{\text{input target current value}} = I\_in\_peak * V_{\text{current actual input voltage}} / V_{\text{input voltage peak}}$$

Step S4: Compare the current actual input current value with the target input current value, and determine duty cycle and frequency adjustment instruction information for the switch at a high frequency based on a result of the comparison.

Preferably, step S4 comprises:

when the current actual input current value is less than the target input current value, increase the duty cycle of the switch or reduce the switching frequency; conversely, when the current actual input current value is greater than the target input current value, decrease the duty cycle of the switch or raise the switching frequency.

Specifically, when the current actual input current value is less than the target input current value, instruction information of controlling the switch to reduce the frequency and increase the duty cycle of the switch is generated by the controller, to control the operating state of the switch and further control the charge/discharge time of the inductor, thereby increasing the input current and meeting a power factor correction requirement. In addition, the current actual input current approaches the target input current value, to implement output control. Otherwise, when the current actual input current value is greater than the target input current value, instruction information of controlling the switch to increase the frequency and reduce the duty cycle of the switch is generated in the control center, to control the operating state of the switch and further control the charge time of the inductor, thereby decreasing the input current and meeting a power factor correction requirement. In addition, the current actual input current approaches the target input current value, to implement output control.

Specifically, a degree of controlling the switch to reduce or increase the duty cycle of the switch and increase or reduce the frequency of the switch needs to be determined based on the gap between the current actual input current value and the target input current value. A specific implementation manner and process are not limited, and a person of ordinary skill in the art may try for setting based on an actual scenario.

Step S5: The switch of the power circuit executes the instruction information to control the charge and discharge time of the inductor in the power circuit, so that the current actual input current value of the power circuit approaches the target input current value as much as possible. This enables the power circuit unit to simultaneously achieve power factor correction and dynamic boosting/bucking adjustment according to the output requirements.

Preferably, step S5 comprises:

The switch executes the instruction information to increase the duty cycle or reduce the frequency, which lengthens the inductor charge time. This increases the current output power of the power circuit, subsequently raising the input power of the circuit and thereby increasing the actual input current value, causing it to approach the target input current value.

Conversely, when the switch executes the instruction information to reduce the duty cycle or increase the frequency, the inductor charge time decreases. This reduces the current output power of the power circuit, leading to a subsequent decrease in input power. As a result, the actual input current is lowered and approaches the target input current value.

In step S5, the switch of the power circuit executes the instruction information dynamically to control the charge and discharge time of the inductor in the power circuit, so that the current actual input current value of the power circuit approaches the target input current value as much as possible.

Specifically, the switch of the power circuit executes a current duty cycle or frequency adjustment instruction sent by the controller, to control the charge and discharge time and frequency of the inductor of the power circuit, so that the current actual input current value of the power circuit approaches the target input current value as much as possible.

At the same time, because the target input current value here incorporates the phase information of the current input voltage, that is, the adjustment of the actual input current based on the target value already takes into account the phase of the input power supply. It ensures that the actual input current continuously converges toward and fluctuates around the target input current value, thereby endowing the power circuit unit with PFC (power factor tracking) capability.

In this way, the output power is controlled while power factor correction is implemented, that is, dynamic boosting/bucking adjustment is implemented based on the output requirement.

In this embodiment, when the switching frequency is several orders of magnitude higher than the frequency of the periodically fluctuating input power supply, the control method described above allows the inductor in the power circuit unit to dynamically coordinate with the switch frequency. This effectively achieves both power factor correction and dynamic boosting/bucking adjustment according to the output voltage/current requirements of the load. Consequently, the power circuit of the present application can simultaneously achieve power factor correction and dynamic boosting/bucking adjustment based on load demands under AC input and high-power conditions (exceeding 200 W).

The application scenarios for the power circuit of this application are very broad. Due to the minimal number of connected components, its energy loss is significantly lower than that of the prior art, resulting in substantial energy savings. As previously mentioned, taking a charging module product with a full-load efficiency of 95.5% and a power of 30 kW as an example, the energy loss per hour for a product of the prior art is (1-95.5%) × 30 kW × 1 h = 1.35 kWh. In contrast, the power circuit of this application can effectively improve the power conversion efficiency, raising the conversion efficiency of products rated at 30 kW or above to 97% or higher. Assuming a full-load efficiency of 97% for the present power circuit, the power loss per hour for the same power rating would be about 3% × 30 kW × 1 h = 0.9 kWh. Compared with existing technologies, each power circuit unit of this application can save approximately 0.45 kWh per hour. Calculated over 3,000 operating hours per year, a single power circuit product could save 1,350 kWh of electrical energy annually. This clearly demonstrates that the present application offers substantial energy conservation over prior art.

The technical features in the above embodiments may be combined in any manner. For the purpose of simplicity in description, not all possible combinations of the technical features in the above embodiments are described. However, as long as the combinations of these technical features do not conflict with each other, the combinations shall all fall within the scope of the description.

The above embodiments merely represent several implementations of the present application, giving specifics and details thereof, but should not be understood as limiting the scope of the present patent of invention thereby. It should be noted that a person of ordinary skill in the art could also make several alterations and improvements without departing from the spirit of the present application and these would all fall within the scope of protection of the present application. Therefore, the scope of protection of the present patent application shall be in accordance with the appended claims.

Table 1

| Embod iments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 1 | 502.3 | 150.2 | 1:1 | 110 | 60 to 170 | 20 to 70 | DC | 305.20 | 1.66 | 505.11 | 305.20 | DC | 184.10 | 302.36 | 1.64 | 302.36 | 98.30% |
| 2 | 907.6 | 16.2 | 1:4 | 1500 | 80 to 120 | 50 to 60 | DC | 50.30 | 4.24 | 213.37 | 50.30 | DC | 304.67 | 251.50 | 0.83 | 251.50 | 97.30% |
| 3 | 600.3 | 150.2 | 1:1 | 100 | 120 to 170 | 45 to 55 | AC | 379.98 | 2.29 | 871.09 | 537.30 | DC | 338.86 | 537.29 | 1.59 | 537.29 | 97.80% |
| 4 | 907.7 | 10.3 | 1:5 | 3000 | 60 to 100 | 45 to 55 | DC | 40.70 | 5.47 | 222.49 | 45.70 | DC | 244.86 | 230.0 | 0.94 | 230.00 | 97.10% |
| 5 | 998.7 | 30.5 | 1:2 | 770 | 60 to 170 | 20 to 70 | DC | 50.20 | 3.12 | 156.67 | 50.20 | DC | 150.70 | 149.95 | 1.02 | 149.95 | 97.80% |
| 6 | 900.2 | 15.1 | 1:4 | 800 | 80 to 120 | 50 to 60 | DC | 50.00 | 5.39 | 269.67 | 50.00 | DC | 238.20 | 250.00 | 1.05 | 250.00 | 97.30% |
| 7 | 899.6 | 10.0 | 1:4 | 3000 | 120 to 170 | 50 to 60 | DC | 60.30 | 6.50 | 392.11 | 60.30 | DC | 105.06 | 200.00 | 1.90 | 200.00 | 97.10% |
| 8 | 300.0 | 1,000.0 | 1:1 | 200 | 80 to 120 | 45 to 55 | DC | 200.00 | 1.18 | 236.12 | 200.00 | DC | 192.13 | 210.10 | 1.09 | 210.10 | 97.30% |
| 9 | 907.6 | 20.1 | 1:3 | 1,000 | 80 to 120 | 45 to 55 | DC | 60.15 | 3.68 | 221.65 | 60.20 | DC | 186.02 | 200.50 | 1.08 | 200.50 | 97.50% |
| 10 | 907.6 | 150.3 | 1:1 | 200 | 120 to 170 | 45 to 55 | DC | 362.88 | 2.26 | 820.16 | 362.90 | DC | 202.88 | 403.20 | 2.00 | 403.20 | 98.20% |
| 11 | 603.4 | 15.0 | 1:4 | 2900 | 60 to 100 | 45 to 55 | DC | 49.30 | 5.23 | 257.92 | 49.30 | DC | 155.76 | 197.20 | 1.27 | 197.20 | 96.80% |
| 12 | 240.8 | 950.0 | 1:1 | 300 | 80 to 120 | 55 to 65 | AC | 220.60 | 1.71 | 377.87 | 311.90 | DC | 300.30 | 440.90 | 0.83 | 440.90 | 96.50% |
| 13 | 998.7 | 30.4 | 1:2 | 220 | 60 to 120 | 55 to 65 | DC | 50.40 | 4.56 | 229.72 | 50.40 | DC | 108.45 | 155.23 | 1.43 | 155.23 | 96.72% |
| 14 | 998.7 | 30.4 | 1:3 | 220 | 60 to 120 | 45 to 55 | DC | 50.40 | 4.34 | 218.65 | 50.40 | DC | 110.24 | 152.83 | 1.39 | 152.83 | 96.90% |

(continued)

| Embodiments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 15 | 999.7 | 15.0 | 1:2 | 221 | 60 to 120 | 30 to 40 | DC | 50.17 | 9.16 | 459.69 | 50.17 | DC | 53.29 | 153.83 | 2.89 | 153.83 | 96.60% |
| 16 | 901.3 | 15.0 | 1:2 | 1500 | 80 to 120 | 30 to 40 | DC | 51.20 | 5.15 | 263.83 | 51.20 | DC | 53.80 | 117.76 | 2.19 | 117.76 | 97.70% |
| 17 | 300.0 | 950.0 | 1:1 | 50 | 80 to 120 | 45 to 55 | AC | 200.60 | 1.18 | 235.83 | 283.60 | DC | 375.07 | 292.16 | 0.78 | 292.16 | 96.50% |
| 18 | 907.1 | 200.9 | 1:1 | 105 | 80 to 120 | 35 to 45 | DC | 300.10 | 1.99 | 596.42 | 300.10 | DC | 154.96 | 300.65 | 1.94 | 300.65 | 97.80% |
| 19 | 310.3 | 50.3 | 2:1 | 800 | 60 to 100 | 25 to 35 | AC | 379.98 | 3.90 | 1480.30 | 537.30 | DC | 7.95 | 107.46 | 13.51 | 107.46 | 98.10% |
| 20 | 400.2 | 204.1 | 5:1 | 200 | 80 to 120 | 35 to 45 | DC | 600.30 | 2.86 | 1715.15 | 600.30 | DC | 3.36 | 75.04 | 22.35 | 75.04 | 97.80% |
| 21 | 350.2 | 250.7 | 3:1 | 500 | 80 to 120 | 35 to 45 | DC | 600.30 | 2.51 | 1508.38 | 600.30 | DC | 9.73 | 120.06 | 12.34 | 120.06 | 98.20% |
| 22 | 1985.8 | 90.8 | 4:1 | 220 | 60 to 170 | 20 to 70 | AC | 220.17 | 4.87 | 1072.23 | 311.10 | DC | 20.00 | 43.12 | 24.10 | 43.12 | 96.92% |
| 23 | 900.3 | 150.3 | 1:5 | 200 | 80 to 120 | 45 to 55 | DC | 379.91 | 3.83 | 1454.06 | 537.20 | DC | 8.23 | 107.44 | 13.05 | 107.44 | 96.40% |
| 24 | 310.3 | 55.2 | 2:1 | 790 | 60 to 100 | 25 to 35 | AC | 379.98 | 3.40 | 1292.33 | 537.29 | DC | 8.46 | 103.33 | 12.22 | 103.33 | 97.70% |
| 25 | 310.3 | 100.8 | 2:1 | 210 | 80 to 120 | 20 to 30 | DC | 670.30 | 1.66 | 1114.65 | 670.30 | DC | 7.20 | 88.20 | 12.25 | 88.20 | 96.90% |
| 26 | 250.3 | 240.2 | 2:1 | 210 | 60 to 80 | 20 to 30 | DC | 670.30 | 1.86 | 1245.41 | 670.30 | DC | 10.36 | 111.72 | 10.78 | 111.72 | 96.70% |
| 27 | 230.8 | 55.2 | 3:1 | 220 | 60 to 120 | 30 to 40 | DC | 211.15 | 5.73 | 1209.97 | 211.15 | DC | 1.50 | 41.83 | 27.94 | 41.83 | 96.58% |
| 28 | 633.3 | 55.2 | 4:1 | 440 | 60 to 120 | 30 to 40 | AC | 220.25 | 6.10 | 1344.50 | 311.43 | DC | 2.11 | 52.38 | 24.85 | 52.38 | 96.8 1% |

| Embod iments | Inductance of the inductor / μH | Primary side of the transformer / μH | Primary-s econdary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 29 | 300.2 | 65.5 | 2:1 | 660 | 60 to 120 | 20 to 30 | AC | 380.11 | 3.05 | 1159.17 | 537.48 | DC | 9.12 | 100.77 | 11.05 | 100.77 | 96.03% |
| 30 | 933.3 | 150.3 | 4:1 | 790 | 60 to 120 | 30 to 40 | AC | 379.86 | 3.05 | 1158.57 | 537.12 | DC | 4.50 | 70.94 | 15.76 | 70.94 | 96.48% |
| 31 | 301.7 | 80.7 | 4:1 | 790 | 60 to 120 | 30 to 40 | AC | 379.86 | 4.86 | 1847.70 | 537.12 | DC | 3.04 | 73.43 | 24.18 | 73.43 | 96.09% |
| 32 | 503.1 | 80.8 | 2:1 | 440 | 60 to 100 | 45 to 55 | DC | 250.80 | 4.90 | 1227.88 | 250.80 | DC | 209.30 | 501.60 | 2.40 | 501.60 | 97.90% |
| 33 | 903.6 | 250.3 | 1:2 | 50 | 120 to 170 | 50 to 60 | DC | 538.90 | 2.60 | 1402.68 | 538.90 | DC | 94.57 | 359.27 | 3.80 | 359.27 | 97.30% |
| 34 | 300.4 | 30.0 | 1:2 | 3000 | 80 to 120 | 45 to 55 | DC | 200.70 | 8.00 | 1605.58 | 200.70 | DC | 103.03 | 401.40 | 3.90 | 401.40 | 97.40% |
| 35 | 230.7 | 999.5 | 1:1 | 80 | 60 to 100 | 50 to 60 | AC | 380.10 | 3.28 | 1246.66 | 537.50 | DC | 345.05 | 644.95 | 1.87 | 644.95 | 96.70% |
| 36 | 799.6 | 150.2 | 1:1 | 220 | 60 to 170 | 20 to 70 | AC | 380.10 | 2.74 | 1040.71 | 537.40 | DC | 233.90 | 488.24 | 2.09 | 488.24 | 97.93% |
| 37 | 1502.1 | 150.2 | 1:1 | 220 | 60 to 170 | 20 to 70 | AC | 379.30 | 2.93 | 1110.21 | 537.40 | DC | 178.50 | 440.94 | 2.47 | 440.94 | 98.13% |
| 38 | 150.2 | 298.5 | 1:1 | 220 | 60 to 170 | 20 to 70 | AC | 381.30 | 2.71 | 1033.70 | 537.40 | DC | 158.40 | 398.75 | 2.52 | 398.75 | 97.09% |
| 39 | 788.6 | 148.9 | 1:1 | 2900 | 60 to 100 | 50 to 60 | DC | 300.40 | 4.51 | 1355.22 | 300.40 | DC | 138.67 | 429.14 | 3.09 | 429.14 | 98.00% |
| 40 | 788.6 | 166.3 | 1:2 | 55 | 120 to 170 | 35 to 45 | DC | 599.50 | 2.15 | 1286.39 | 599.50 | DC | 558.77 | 839.30 | 1.50 | 839.30 | 98.00% |
| 41 | 933.9 | 35.0 | 1:2 | 200 | 120 to 170 | 35 to 45 | DC | 343.80 | 5.50 | 1889.52 | 343.80 | DC | 131.75 | 491.14 | 3.73 | 491.14 | 96.90% |
| 42 | 230.7 | 950.1 | 1:1 | 1500 | 60 to 100 K | 50 to 60 | AC | 380.10 | 3.05 | 1160.89 | 537.46 | DC | 311.36 | 591.21 | 1.90 | 591.21 | 96.70% |

EP 4 723 451 A1

25

| Embodiments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 43 | 901.5 | 110.3 | 1:1 | 105 | 80 to 120 | 45 to 55 | DC | 300.10 | 4.00 | 1200.95 | 300.10 | DC | 78.22 | 303.10 | 3.88 | 303.10 | 97.80% |
| 44 | 300.9 | 150.2 | 1:1 | 220 | 60 to 120 | 40 to 50 | AC | 380.20 | 3.19 | 1213.54 | 537.60 | DC | 142.41 | 410.30 | 2.88 | 410.32 | 97.41% |
| 45 | 300.9 | 110.5 | 1:1 | 220 | 60 to 120 | 40 to 50 | AC | 379.70 | 4.32 | 1639.50 | 536.90 | DC | 104.71 | 408.30 | 3.90 | 408.30 | 97.11% |
| 46 | 300.9 | 95.1 | 1:1 | 220 | 60 to 120 | 40 to 50 | AC | 381.30 | 5.11 | 1948.25 | 539.16 | DC | 91.44 | 415.30 | 4.54 | 415.39 | 96.8 1% |
| 47 | 601.2 | 60.5 | 1:1 | 440 | 100 to 170 | 35 to 45 | AC | 379.70 | 3.89 | 1477.57 | 536.90 | DC | 91.03 | 361.40 | 3.97 | 361.46 | 97.11% |
| 48 | 900.9 | 100.7 | 1:1 | 600 | 100 to 170 | 50 to 60 | AC | 381.30 | 5.05 | 1924.21 | 539.16 | DC | 315.84 | 765.30 | 2.42 | 765.38 | 96.37% |
| 49 | 253.9 | 50.1 | 2:1 | 800 | 50 to 90 | 25 to 35 | AC | 380.10 | 5.37 | 2042.96 | 537.50 | DC | 5.77 | 107.49 | 18.63 | 107.49 | 98.00% |
| 50 | 253.9 | 249.1 | 2:1 | 200 | 60 to 100 | 45 to 55 | DC | 498.50 | 5.39 | 2685.91 | 498.50 | DC | 23.82 | 249.25 | 10.46 | 249.25 | 97.10% |
| 51 | 481.2 | 200.3 | 2:1 | 800 | 60 to 120 | 25 to 35 | DC | 1013.55 | 5.08 | 5147.81 | 1013.60 | DC | 12.56 | 249.12 | 19.84 | 249.12 | 96.01% |
| 52 | 1581.7 | 200.3 | 1:1 | 800 | 60 to 120 | 25 to 35 | DC | 903.95 | 2.92 | 2643.29 | 904.00 | DC | 78.91 | 449.12 | 5.69 | 449.12 | 96.71% |
| 53 | 1502.1 | 66.3 | 2:1 | 510 | 60 to 170 | 20 to 70 | AC | 220.52 | 9.51 | 2097.15 | 311.10 | DC | 178.50 | 200.77 | 10.06 | 200.77 | 96.33% |
| 54 | 1432.6 | 11.2 | 1:1 | 220 | 60 to 170 | 20 to 70 | DC | 599.80 | 17.64 | 10580.47 | 599.80 | DC | 1.80 | 537.91 | 18.89 | 537.91 | 96.02% |
| 55 | 913.6 | 160.1 | 1:1 | 400 | 120 to 170 | 25 to 35 | DC | 943.95 | 2.41 | 2272.55 | 943.95 | DC | 78.35 | 414.76 | 5.29 | 414.76 | 96.61% |
| 56 | 253.9 | 55.1 | 2:1 | 790 | 60 to 100 | 25 to 35 | DC | 466.80 | 4.85 | 2263.27 | 466.80 | DC | 4.26 | 97.25 | 22.81 | 97.25 | 98.00% |

EP 4 723 451 A1

26

| Embod iments | Inductan ce of the inductor / μH | Primary side of the transformer / μH | Primary-s econdary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 57 | 253.9 | 240.0 | 2:1 | 500 | 60 to 100 | 45 to 55 | DC | 603.80 | 5.68 | 3426.88 | 603.80 | DC | 12.14 | 201.27 | 16.58 | 201.27 | 97.40% |
| 58 | 1433.6 | 160.3 | 2:1 | 600 | 120 to 170 | 40 to 50 | DC | 998.29 | 4.83 | 4825.23 | 998.29 | DC | 35.36 | 404.91 | 11.45 | 404.91 | 96.10% |
| 59 | 913.6 | 149.1 | 2:1 | 600 | 100 to 150 | 35 to 45 | DC | 973.38 | 5.03 | 4895.11 | 973.38 | DC | 20.57 | 311.40 | 15.14 | 311.40 | 96.3 1% |
| 60 | 901.3 | 15.3 | 5:1 | 1500 | 80 to 120 | 45 to 55 | DC | 51.20 | 4.42 | 226.09 | 51.20 | DC | 298.83 | 256.00 | 0.86 | 256.00 | 97.00% |
| 61 | 900.3 | 250.7 | 4:1 | 50 | 120 to 170 | 30 to 40 | AC | 379.98 | 0.74 | 283.08 | 537.30 | DC | 16.44 | 67.16 | 4.08 | 67.16 | 96.90% |
| 62 | 900.3 | 300.6 | 4:1 | 30 | 120 to 170 | 30 to 40 | AC | 381.18 | 0.65 | 247.88 | 539.00 | DC | 18.67 | 67.37 | 3.61 | 67.37 | 98.10% |
| 63 | 1985.8 | 35.1 | 3:1 | 220 | 60 to 120 | 25 to 35 | AC | 220.15 | 5.80 | 1277.93 | 311.29 | DC | 1.42 | 41.83 | 29.51 | 41.83 | 96.58% |
| 64 | 933.3 | 30.5 | 3:1 | 660 | 60 to 120 | 25 to 35 | AC | 219.75 | 5.27 | 1158.12 | 310.73 | DC | 1.53 | 41.39 | 27.08 | 41.39 | 96.78% |

**Claims**

1. A power circuit, wherein the power circuit comprises: an information acquisition module, a power circuit unit, and a controller. The power circuit unit comprises an inductor, a switch, a capacitor, and a transformer;

   One end of the input power supply that provides electric energy to the power circuit unit is connected to one end of the inductor. The other end of the inductor is connected to one end of the capacitor and one end of the switch. The other end of the capacitor is connected to one end of the primary winding of the transformer. The other end of the switch and the other end of the primary winding of the transformer are connected to the other end of the input power supply and grounded. The two output ends of the secondary winding of the transformer serve as the output ends of the power circuit unit.
   The information acquisition module is used to collect information from the input and/or output ends of the power circuit unit.
   The controller is connected to the information acquisition module and the switch. It is used to generate instruction information that controls the duty cycle and frequency of the switch based on the information collected by the information acquisition module and the output requirements of the load on the power circuit, and to control the switch to execute the instruction information.

2. The power circuit according to claim 1, wherein when a ratio of an input voltage maximum $V_{input}$ to an output voltage maximum $V_{output}$ of the power circuit unit is $V_{input} : V_{output}$ = 0.2-8, and an output power is greater than 200 W, parameters of the capacitors range from 30 nF to 3 $\mu$F, inductance of the primary windings of the transformers ranges from 10 $\mu$H to 1,000 $\mu$H, and ratios of the primary windings to the secondary windings of the transformers are $R_{primary} : R_{secondary}$ = 1:5 to 5:1.

3. The power circuit according to claim 2, wherein when a ratio of an input voltage maximum to an output voltage maximum of the power circuit unit is $V_{input} : V_{output}$ = 0.2 to 1.0, and an output power is 200 W to 1,000 W, inductance of the primary windings of the transformers ranges from 10 $\mu$H to 1,000 $\mu$H, parameters of the capacitors range from 100 nF to 3 $\mu$F, and ratios of the primary windings to the secondary windings of the transformers are $R_{primary} : R_{secondary}$ = 1:5 to 1:1.

4. The power circuit according to claim 2, wherein when a ratio of an input voltage maximum to an output voltage maximum of the power circuit unit is $V_{input} : V_{output}$ = 5.0 to 8.0, and an output power is 1,000 W to 2,000 W, primary winding inductance of the transformers ranges from 50 $\mu$H to 250 $\mu$H, parameters of the capacitors range from 200 nF to 800 nF, and ratios of the primary windings to the secondary windings of the n transformers are $R_{primary} : R_{secondary}$ = 2:1 to 5:1.

5. The power circuit according to claim 2, wherein when a ratio of an input voltage maximum to an output voltage maximum of the power circuit unit is $V_{input} : V_{output}$ = 0.5 to 1.5, and an output power is 1,000 W to 2,000 W, primary winding inductance of transformers ranges from 30 $\mu$H to 1,000 $\mu$H, parameters of the capacitors range from 50nF-3$\mu$F, ratios of the primary windings to the secondary windings of the transformers are $R_{primary} : R_{secondary}$ = 1:2 to 2:1.

6. The power circuit according to claim 2, wherein when a ratio of an input voltage maximum to an output voltage maximum of the power circuit unit is $V_{input} : V_{output}$ = 2.0 to 5.0, and an output power is 2,000 W to 10,000 W, primary winding inductance of the transformers ranges from 50 $\mu$H to 250 $\mu$H, parameters of the capacitors range from 200 nF to 800 nF, and ratios of the primary windings to the secondary windings of the transformers are $R_{primary} : R_{secondary}$ = 2:1 to 5:1.

7. The power circuit according to any one of claims 1 to 6, wherein the power circuit unit further comprises an output half-wave rectifier module, one end of which is connected to one end of the secondary winding of the transformer, wherein the other end of the output half-wave rectifier module and the other end of the secondary winding of the transformer serve as the output end of the power circuit unit.

8. The power circuit according to any one of claims 1 to 6, wherein when the input power supply of the power circuit unit is alternating current, the power circuit further comprises an input rectifier module for providing direct current input to the inductor.

9. The power circuit according to any one of claims 1 to 6, wherein

the output half-wave rectifier module of the power circuit unit implements half-wave rectification by a diode.

10. The power circuit according to any one of claims 1 to 6, wherein the output half-wave rectifier module implements half-wave rectification by a fifth switch and a fifth controller that controls the fifth switch.

11. The power circuit according to claim 9, wherein the fifth controller controls the operating mode of the fifth switch according to the inducing mode of electric energy in the secondary winding of the transformer controlled by the controller of the power circuit.

12. The power circuit according to any one of claims 1 to 6, and 11, wherein the switch of the power circuit unit is implemented through a bidirectional switch, switch assembly, or a controllable switching device.

13. The power circuit according to any one of claims 1 to 6, and 11, wherein a range of a leakage inductance value of the transformer of the power circuit is less than 1.5%.

14. The power circuit according to any one of claims 1 to 6, and 11, wherein the transformer of the power circuit has a structure of a copper foil or a U-shaped metal sheet, and a parallel winding.

15. The power circuit according to any one of claims 1 to 6, and 11, wherein the inductor of the power circuit cooperates with the controller's control of the switch's operating state to participate in implementing power factor correction, and further implements dynamic boosting/bucking adjustment based on the output requirement.

16. A first extended power circuit, wherein when the input power supply is alternating current, it comprises two power circuit units according to any one of claims 1 to 14. The first extended power circuit includes a first power circuit unit, a second power circuit unit, a first information acquisition module configured to collect voltage/current information from the input and output ends of the first extended power circuit, a first diode and a second diode respectively connected to the first and second power circuit units, and a first control center connected to the first information acquisition module and configured to control the operating states of the switches in the first/second power circuit units.

17. A first extended power circuit according to claim 16, wherein when the input power supplies current to the first power circuit unit through the first diode, the first control center controls the switch of the second power circuit unit to be in an open state, such that the first power circuit unit operates normally.
When the input power supplies current to the second power circuit unit through the second diode, the first control center controls the switch of the first power circuit unit to be in an open state, such that the second power circuit unit operates normally.

18. A first extended power circuit according to claims 16 and 17, wherein the output ends of the first power circuit for supplying electric energy are connected in series or in parallel with the output ends of the second power circuit for supplying electric energy.

19. A second extended power circuit, wherein when the input power supply is alternating current, it comprises two power circuit units according to any one of claims 1 to 15, which are respectively a third power circuit unit and a fourth power circuit unit, a second information acquisition module for collecting voltage/current information at the input and output ends of the second extended power circuit, and a second control center connected to the second information acquisition module and configured to control the operating states of switches in the third/fourth power circuit unit.

20. A second extended power circuit according to claim 19, wherein the output ends of the third power circuit for supplying electric energy are connected in series or in parallel with the output ends of the fourth power circuit for supplying electric energy.

21. A second extended power circuit according to any one of claims 19 or 20, wherein when the input power supplies current to the third power circuit unit, the second control center controls the switch of the fourth power circuit unit to be in a closed state, such that the third power circuit unit operates normally.
When the input power supplies current to the fourth power circuit unit, the second control center controls the switch of the third power circuit unit to be in a closed state, such that the fourth power circuit unit operates normally.

22. A third extended power circuit, wherein when the input power is alternating current, the third extended power circuit includes the second extended power circuit according to any one of claims 19 to 21, with the inductor omitted in the third or fourth power circuit unit.

23. A method for implementing power factor correction and dynamic boosting/bucking adjustment with a power circuit, wherein the power circuit is the power circuit according to any one of claims 1 to 15 above, or the first extended power circuit according to any one of claims 16 to 18, or the second extended power circuit according to any one of claims 19 to 21, or the third extended power circuit according to claim 22, and the method comprises:

step S1: obtaining a current actual input current value, a current actual input voltage value, a current actual output voltage value, and a current actual output current value dynamically;

step S2: comparing an obtained current actual output power with a target output power required by a connected load;

step S3: dynamically determining the target input current value based on a result of the comparison between the current actual output power and the target output power;

step S4: comparing the current actual input current value with the target input current value, and dynamically determining duty cycle and frequency adjustment instruction information for a switch based on a result of the comparison; and

step S5: executing, by the switch of a power circuit, the instruction information to dynamically control charge and discharge time of an inductor of the power circuit, so that the current actual input current value of the power circuit approaches the target input current value as much as possible.

*FIG.1*

*FIG. 2*

FIG.3

FIG.4

FIG.5

FIG.6

FIG.7

*FIG.8*

*FIG.9*

Obtaining a current actual input current value, a current actual input voltage value, a current actual output voltage value, and a current actual output current value ⟋ S1

Comparing an obtained current actual output power with a target output power required by a connected load ⟋ S2

Dynamically adjusting an input current value based on a result of the comparison between the current actual output power and the target output power ⟋ S3

Comparing the current actual input current value with the target input current value, and dynamically determining duty cycle and frequency adjustment instruction information for a switch based on a result of the comparison ⟋ S4

Executing, by the switch of a power circuit, the instruction information to dynamically control charge and discharge time of an inductor of the power circuit, so that the current actual input current value of the power circuit approaches the target input current value as much as possible ⟋ S5

*FIG 10*

## INTERNATIONAL SEARCH REPORT

| International application No. |
| --- |
| **PCT/CN2023/130202** |

### A. CLASSIFICATION OF SUBJECT MATTER

H02M1/00(2007.01)i; H02M1/42(2007.01)i; H02M3/335(2006.01)i

According to International Patent Classification (IPC) or to both national classification and IPC

### B. FIELDS SEARCHED

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 隔离, 变压器, 电感, 电容, 库克, 功率因数, 功率因素, 功率因子, 电流, 电压, 功率, sepic, cuk, isolated, transformer, inductor, capacitor, power, factor, PFC, current, voltage

### C. DOCUMENTS CONSIDERED TO BE RELEVANT

| Category* | Citation of document, with indication, where appropriate, of the relevant passages | Relevant to claim No. |
| --- | --- | --- |
| X | KR 20180112361 A (POSTECH ACADEMY-INDUSTRY FOUNDATION) 12 October 2018 (2018-10-12) <br> description, paragraphs 2-64, and figures 1-9 | 1-20, 22 |
| Y | KR 20180112361 A (POSTECH ACADEMY-INDUSTRY FOUNDATION) 12 October 2018 (2018-10-12) <br> description, paragraphs 2-64, and figures 1-9 | 23 |
| Y | CN 106169863 A (ZHEJIANG UNIVERSITY) 30 November 2016 (2016-11-30) <br> description, paragraphs 5-64, and figures 1-2 | 23 |
| PX | CN 116846186 A (SHENZHEN CONTEMPORARY E-ENERGY TECHNOLOGY CO., LTD.) 03 October 2023 (2023-10-03) <br> description, paragraphs 6-212, and figures 3-10 | 1-23 |
| E | CN 117477900 A (SHENZHEN CONTEMPORARY E-ENERGY TECHNOLOGY CO., LTD.) 30 January 2024 (2024-01-30) <br> description, paragraphs 6-210, and figures 3-10 | 1-23 |

☑ Further documents are listed in the continuation of Box C.     ☑ See patent family annex.

| | |
| --- | --- |
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **04 February 2024** | **07 February 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/130202** |

**C. DOCUMENTS CONSIDERED TO BE RELEVANT**

| Category* | Citation of document, with indication, where appropriate, of the relevant passages | Relevant to claim No. |
| --- | --- | --- |
| X | CN 107689738 A (SUZHOU MAILI ELECTRICAL APPLIANCE CO., LTD.) 13 February 2018 (2018-02-13) description, paragraphs 2-37, and figures 1-4 | 1-20, 22 |
| A | CN 101771346 A (MACROBLOCK, INC.) 07 July 2010 (2010-07-07) entire document | 1-23 |

Form PCT/ISA/210 (second sheet) (July 2022)

## INTERNATIONAL SEARCH REPORT
### Information on patent family members

International application No.

**PCT/CN2023/130202**

| Patent document cited in search report | | | Publication date (day/month/year) | Patent family member(s) | | | Publication date (day/month/year) |
|---|---|---|---|---|---|---|---|
| KR | 20180112361 | A | 12 October 2018 | KR | 101920469 | B1 | 20 November 2018 |
| CN | 106169863 | A | 30 November 2016 | None | | | |
| CN | 116846186 | A | 03 October 2023 | None | | | |
| CN | 117477900 | A | 30 January 2024 | None | | | |
| CN | 107689738 | A | 13 February 2018 | None | | | |
| CN | 101771346 | A | 07 July 2010 | CN | 101771346 | B | 08 August 2012 |

Form PCT/ISA/210 (patent family annex) (July 2022)